# EUROPEAN PATENT APPLICATION

(11) **EP 4 527 687 A1**
(43) Date of publication of application: **26.03.2025**
(21) Application number: 23807676.4
(22) Date of filing: 17.05.2023
(51) Int. Cl.: B60N 2/80, A47C 7/38, B60N 2/90

(54) **VEHICLE SEAT**

(30) Priority: 18.05.2022 US 202263364899 P; 12.08.2022 US 202263371322 P; 14.09.2022 US 202263375623 P; 16.05.2023 JP 2023081030; 16.05.2023 JP 2023081031
(71) Applicant: TS Tech Co., Ltd., Asaka-shi Saitama 351-0012 (JP)
(72) Inventor: ENDO, Shoji, Shioya-gun, Tochigi 329-1217 (JP); MIYAWAKI, Kazuya, Shioya-gun, Tochigi 329-1217 (JP); ISHIZUKA, Takashi, Shioya-gun, Tochigi 329-1217 (JP); MASUDA, Tadanori, Shioya-gun, Tochigi 329-1217 (JP); NAOI, Hidekazu, Shioya-gun, Tochigi 329-1217 (JP); ISHIHARA, Junya, Shioya-gun, Tochigi 329-1217 (JP); YAMABE, Atsushi, Shioya-gun, Tochigi 329-1217 (JP)
(74) Representative: Grünecker Patent- und Rechtsanwälte PartG mbB
(86) International application number: PCT/JP2023/018464
(87) International publication number: WO 2023/224075

(57) **Abstract**

An object of the present invention is to provide a conveyance seat including a support member that allows efficient separation work when a pad material is separated from a frame. A vehicle seat (S1) includes an armrest (5) that supports a seated occupant. The armrest (5) includes an armrest frame (30) and a first armrest pad (41) that covers the armrest frame (30). The first armrest pad (41) includes a body portion (42) that is located between the armrest frame (30) and a support surface (5b), and that receives a load of the seated occupant, and an attachment portion (43) which protrudes from the body portion (42) in a direction separating from the support surface (5b), and in which an engagement portion (44) that engages with the armrest frame (30) is formed.

## Description

### TECHNICAL FIELD

The present invention relates to a conveyance seat, particularly to a conveyance seat including a pad material.

### BACKGROUND ART

A vehicle seat is composed of a plurality of support members that support a seated occupant. Specifically, the vehicle seat includes a seat cushion, a seat back, a headrest, and an armrest, and the seat cushion, the seat back, the headrest, and the armrest are configured to be able to support the buttocks, the back, the head, and the arm of the seated occupant, respectively. Accordingly, fatigue of the seated occupant who is seated for long period of time can be reduced.

In addition, PATENT LITERATURE 1 discloses a vehicle seat including an ottoman. The ottoman is attached to a seat cushion, and includes a movable mechanism that is displaceable between a stored state where the ottoman is stored with respect to the seat cushion and a deployed state where the ottoman is deployed with respect to the seat cushion. The ottoman in the deployed state is one of support members constituting the vehicle seat, and supports the lower legs of a seated occupant.

Here, the support member includes, as basic configurations, a frame forming the skeleton of the support member; a pad material that covers the frame, and that receives the load of the seated occupant; and a skin material that covers the pad material.

### CITATION LIST

### PATENT LITERATURE

PATENT LITERATURE 1: JP 2017-94870 A

### SUMMARY OF INVENTION

### TECHNICAL PROBLEM

The seated occupant can be seated in the vehicle seat in a more relaxed posture due to the support member. However, further improvements are required regarding dismantling work after a vehicle is scrapped. In detail, in the dismantling work of the support member constituting the vehicle seat, it is necessary to separate the skin material and the pad material from the frame. In the related art, in many cases, the pad material that covers the frame is fixed using an adhesive, and the work of separating the pad material from the frame is a large workload.

The present invention has been made in view of the above-described problems, and an object of the present invention is to provide a conveyance seat including a support member that allows efficient separation work when a pad material is separated from a frame.

### SOLUTION TO PROBLEM

The above-described problems are solved by a conveyance seat of the present invention, the conveyance seat including a support member that supports a seated occupant. The support member includes a frame forming a skeleton of the support member, and a pad material that covers the frame. The pad material includes a pad body that is located between the frame and a support surface that supports the seated occupant, and that receives a load of the seated occupant, and an attachment portion which protrudes from the pad body in a direction separating from the support surface, and in which an engagement portion that engages with the frame is formed.

According to the above-described configuration, the support member includes the frame forming the skeleton of the support member, and the pad material that covers the frame, and the pad material includes the attachment portion in which the engagement portion that engages with the frame is formed. For that reason, when the pad material is separated from the frame, the pad material and the frame can be easily separated from each other by releasing the state of engagement between the frame and the attachment portion, and the separation work can be efficiently performed.

In addition, it is preferable that the engagement portion is formed inside an outer peripheral surface of the pad body, the outer peripheral surface being formed in a direction perpendicular to the direction separating from the support surface.

According to the above-described configuration, since the engagement portion is formed inside the outer peripheral surface of the pad body, an increase in the size of the pad material due to the formation of the engagement portion can be suppressed.

In addition, it is preferable that the engagement portion is formed at a position overlapping the frame in a direction perpendicular to the support surface.

According to the above-described configuration, since the engagement portion is formed at a position overlapping the frame in the direction perpendicular to the support surface, the release of the state of engagement between the engagement portion and the frame due to the load of the seated occupant can be suppressed.

In addition, it is preferable that the frame includes a pair of parallel frames located at both end portions in a right to left direction or both end portions in an up to down direction, and extending parallel to each other, and a connecting frame that connects the pair of parallel frames at end portions of the pair of parallel frames in a longitudinal direction, and it is preferable that the engagement portion is formed at a position overlapping the connecting frame in the direction perpendicular to the support surface.

According to the above-described configuration, since the engagement portion is formed at a position overlapping the connecting frame in the direction perpendicular to the support surface, the state of engagement between the engagement portion and the connecting frame can be released by displacing the pad material to be separated from the connecting frame, and separation work when the pad material is separated from the frame can be efficiently performed.

In addition, it is preferable that the engagement portion is formed at a position overlapping the pair of parallel frames in the direction perpendicular to the support surface.

According to the above-described configuration, since the engagement portion is formed at a position overlapping the pair of parallel frames in the direction perpendicular to the support surface, the pad material can be supported in a state where the pad material is appropriately positioned by the parallel frames.

In addition, it is preferable that the engagement portion is continuously formed along the connecting frame and the pair of parallel frames.

According to the above-described configuration, since the engagement portion is continuously formed along the connecting frame and the pair of parallel frames, the pad material can be supported in a state where the pad material is appropriately positioned by the connecting frame and the parallel frames.

In addition, it is preferable that the frame includes a support plate that is interposed between the pair of parallel frames and that supports the pad material.

According to the above-described configuration, since the pad material can be supported by the support plate interposed between the pair of parallel frames, the pad material can be supported in a state where the pad material is appropriately positioned by the frames.

In addition, it is preferable that the support plate is attached to the frame at a position separated from the frame by a connecting member that connects the support plate and the frame.

According to the above-described configuration, since the support plate is attached to the frame at a position separated from the frame, the thickness of the pad material can be increased, and the impact absorption performance of the pad material can be enhanced.

In addition, it is preferable that the support plate is attached to the frame at a position separated from the frame in a direction further away from the support surface than the frame.

According to the above-described configuration, since the support plate is attached to the frame in the direction further away from the support surface than the frame, impact absorption performance of the pad material interposed between the support surface and the support plate can be enhanced.

In addition, it is preferable that the pad material is a molded body made of a first resin material, and it is preferable that the support member includes an outer pad material that covers the frame and the pad material and that is a molded body made of a second resin material different from the first resin material.

According to the above-described configuration, the pad material is molded from the first resin material, whereas the outer pad material is made of the second resin material different from the first resin material. For that reason, the load of the seated occupant can be received by combining two different properties (for example, the flexibility of the pad material), and the properties for receiving the load of the seated occupant can be optimized.

### ADVANTAGEOUS EFFECTS OF INVENTION

According to the conveyance seat of the present invention, it is possible to provide the conveyance seat including the support member that allows efficient separation work when the pad material is separated from the frame.

In addition, an increase in the size of the pad material can be suppressed by forming the engagement portion.

In addition, the release of the state of engagement between the engagement portion and the frame due to the load of the seated occupant can be suppressed.

In addition, the pad material can be supported in a state where the pad material is appropriately positioned by the frame.

In addition, the impact absorption performance of the pad material can be enhanced.

In addition, the properties for receiving the load of the seated occupant can be optimized.

### BRIEF DESCRIPTION OF DRAWINGS

[FIG. 1] FIG. 1 is a perspective view of a vehicle seat with an armrest in a stored position when viewed obliquely from the front.
[FIG. 2] FIG. 2 is a perspective view of the vehicle seat with the armrest in a deployed position when viewed obliquely from the front.
[FIG. 3] FIG. 3 is a perspective view of a seat frame when viewed obliquely from the front.
[FIG. 4] FIG. 4 is a front view of a back frame.
[FIG. 5] FIG. 5 is a front view of an armrest frame.
[FIG. 6] FIG. 6 is a rear transparent view of the armrest.
[FIG. 7] FIG. 7 is an exploded perspective view of the armrest frame and a pad material.
[FIG. 8] FIG. 8 is a perspective view of the armrest frame to which the pad material is attached, when viewed obliquely from the rear.
[FIG. 9] FIG. 9 is a cross-sectional view taken along line A-A of FIG. 6.
[FIG. 10] FIG. 10 is a cross-sectional view taken along line B-B of FIG. 6.
[FIG. 11] FIG. 11 is an exploded perspective view of an armrest frame and a pad material according to a modification example.
[FIG. 12] FIG. 12 is a transparent perspective view of an armrest when viewed obliquely from the rear.
[FIG. 13] FIG. 13 is a cross-sectional view taken along line C-C of FIG. 12.
[FIG. 14] FIG. 14 is a cross-sectional view taken along line D-D of FIG. 12.
[FIG. 15] FIG. 15 is a perspective view of a vehicle seat according to a second embodiment when viewed obliquely from the front.
[FIG. 16] FIG. 16 is a perspective view of a seat frame when viewed obliquely from the front.
[FIG. 17] FIG. 17 is a perspective view of the seat frame with a pad material attached to an ottoman when viewed obliquely from the front.
[FIG. 18] FIG. 18 is a cross-sectional view taken along line E-E of FIG. 17.
[FIG. 19] FIG. 19 is a perspective view of a conveyance seat according to a third embodiment when viewed obliquely from the front.
[FIG. 20] FIG. 20 is a perspective view showing a frame of the conveyance seat.
[FIG. 21] FIG. 21 is a perspective view showing an impact absorber provided in a headrest of a first example.
[FIG. 22] FIG. 22 is a cross-sectional view taken along line A1-A1 of FIG. 21, and is a view showing the state of the headrest before receiving an impact.
[FIG. 23] FIG. 23 is a view showing the headrest in a state where an impact buffer is crushed in a front to rear direction upon receiving an impact.
[FIG. 24] FIG. 24 is a perspective view showing an impact absorber provided in a headrest of a second example.
[FIG. 25] FIG. 25 is a cross-sectional view taken along line B1-B1 of FIG. 24, and is a view showing the state of the headrest before receiving an impact.
[FIG. 26] FIG. 26 is a view showing the headrest in a state where an impact buffer is crushed in the front to rear direction upon receiving an impact load.
[FIG. 27] FIG. 27 is a view showing another example of the headrest in a state where an impact buffer is crushed in the front to rear direction upon receiving an impact load.
[FIG. 28] FIG. 28 is a perspective view showing an impact absorber provided in a headrest of a third example.
[FIG. 29] FIG. 29 is a cross-sectional view taken along line C1-C1 of FIG. 28, and is a view showing the state of the headrest before receiving an impact.
[FIG. 30] FIG. 30 is a view showing the state of a first stage of the impact absorber that is crushed upon receiving an impact.
[FIG. 31] FIG. 31 is a view showing the state of a second stage of the impact absorber that is crushed upon receiving the impact.

### DESCRIPTION OF EMBODIMENTS

Hereinafter, a configuration of a conveyance seat according to one embodiment of the present invention will be described with reference to the drawings. However, the embodiment to be described below is provided for easy understanding of the present invention, and does not limit the present invention. Namely, the present invention can be modified or improved without departing from the concept thereof, and it goes without saying that the present invention includes equivalents thereof.

In addition, in the following description, the content regarding the material, shape, and size of seat components is merely one specific example, and does not limit the present invention.

Incidentally, hereinafter, a vehicle seat that is installed in a vehicle will be provided as one example of the conveyance seat, and a configuration example of the vehicle seat will be described. However, the present invention is not limited to seats installed in ground-traveling conveyances including wheels such as automobiles and trains, and can also be applied to, for example, seats installed in aircrafts, ships, or the like that move in environments other than the ground.

In addition, in the following description, the "seat front to rear direction" is a front to rear direction of the vehicle seat, and is a direction that coincides with a front to rear direction when viewed from a seated occupant seated in the vehicle seat. In addition, the "seat width direction" is a lateral width direction of the vehicle seat, and is a direction that coincides with a right to left direction when viewed from the seated occupant seated in the vehicle seat. In addition, the "up to down direction" is an up to down direction of the vehicle seat, and is a direction that coincides with a vertical direction when the vehicle travels on a horizontal surface. In addition, the "outer side" being simply referred to indicates a side close to the outside in a direction from a center of the vehicle seat toward the outside, and the "inner side" being referred to means a side close to the center in a direction from the outside of the vehicle seat toward the center.

### <Overview of vehicle seat S1>

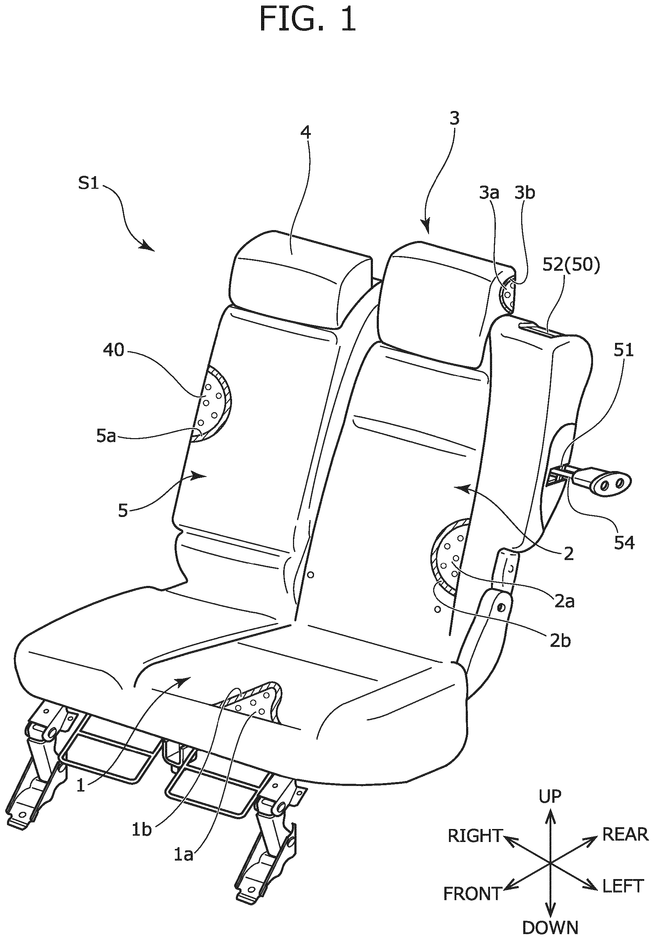

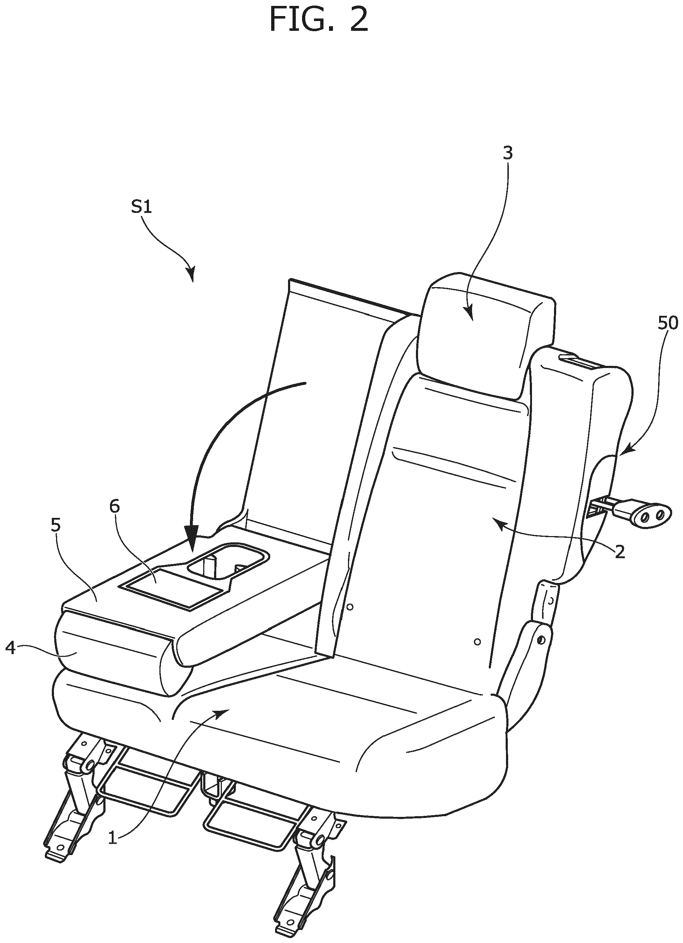

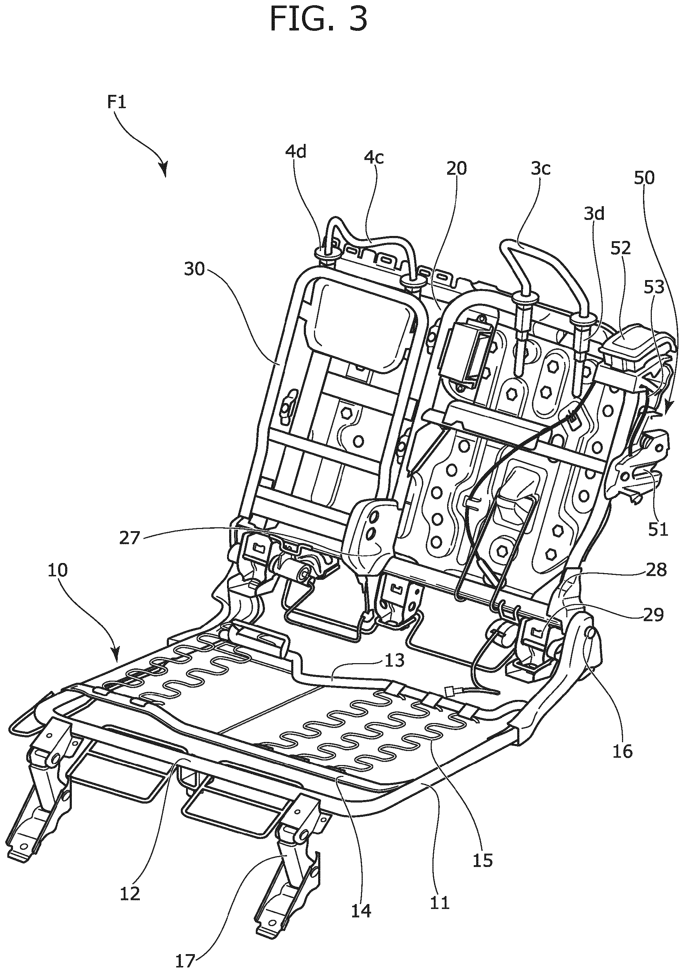

FIG. 1 shows a perspective view of a vehicle seat S1. FIG. 2 shows a perspective view of the vehicle seat S1 when an armrest 5 is in a deployed position. FIG. 3 is a perspective view of a seat frame F1.

The vehicle seat S1 is, for example, a rear seat corresponding to a rear seat of an automobile, and includes a main seat and a sub-seat provided to align with each other in the seat width direction.

The vehicle seat S1 is a seat that can transition between a normal state where the seated occupant can be seated and a stored state where a seat body is stored on a vehicle body floor.

Specifically, when the seated occupant operates a back operating lever 52 in the normal state, the vehicle seat S1 is switched to the stored state where the seat body is tilted forward and folded and is stored on the vehicle body floor. In addition, the seated occupant returns the vehicle seat S1 to a use state by manually lifting the seat body upward from the stored state.

The vehicle seat S1 is mainly composed of a main seat including a seat cushion 1, a seat back 2, and a headrest 3; a sub-seat including the armrest 5 and a sub-headrest 4; and a switching device 50.

The seat cushion 1 is a support member that supports the buttocks of the seated occupant, and is a seating portion that supports the seated occupant from below. The seat cushion 1 includes, as main configurations, a cushion frame 10 forming the skeleton of the seat cushion 1 (refer to FIG. 3); a pad material 1a that covers the cushion frame 10; and a skin material 1b that covers the cushion frame 10 and the pad material 1a.

The seat back 2 is a support member that supports the back of the seated occupant, and is a backrest portion that supports the back of the seated occupant from the rear. The seat back 2 includes, as main configurations, a back frame 20 forming the skeleton of the seat back 2; a pad material 2a that covers the back frame 20; and a skin material 2b that covers the back frame 20 and the pad material 2a.

The headrest 3 is a support member that supports the head of the seated occupant, and supports the head of the seated occupant from the rear. The headrest 3 includes, as main configurations, a headrest pillar 3c serving as a core material; a pad material 3a that covers the headrest pillar 3c; and a skin material 3b that covers the headrest pillar 3c and the pad material 3a. The sub-headrest 4 also has the same configuration.

The armrest 5 can be displaced between a stored position where the armrest 5 is stored in the seat back 2 and a deployed position (refer to FIG. 2) where the armrest 5 is deployed from the stored position to the front of the seat. The armrest 5 includes a built-in electrical component 6 such as a lighting device or an audio device, and is larger than a normal armrest. The armrest 5 constitutes a part of the seat back 2 and functions as a backrest portion in the stored position, whereas the armrest 5 functions as an armrest in the deployed position. The armrest 5 is also generally referred to as a "center armrest".

The armrest 5 is a support member that supports the back or the arm of the seated occupant. The armrest 5 includes, as main configurations, an armrest frame 30 forming the skeleton of the armrest 5; an armrest pad 40 that covers the armrest frame 30; and a skin material 5a that covers the armrest frame 30 and the armrest pad 40.

The switching device 50 for switching the vehicle seat S1 between the normal state and the stored state is attached to the left side of the seat back 2 in the seat width direction.

The switching device 50 is mainly composed of a lock member 51, the back operating lever 52, and a connecting cable 53 (refer to FIG. 3). The lock member 51 is used to detachably engage with a striker 54 provided on a vehicle body and lock the rotational operation of the back frame 20. In addition, the back operating lever 52 is an operating member that is operated to release the locked state of the back frame 20. The connecting cable 53 connects the lock member 51 and the back operating lever 52.

In the above-described configuration, the switching device 50 is allowed to release the locked state of the lock member 51 by operating the back operating lever 52 when the seat body is in the normal state.

When the locked state is released, the vehicle seat S1 is switched to the stored state where the seat back 2 is tilted forward by the biasing force of a reclining device, is folded together with the seat cushion 1, and is stored on the vehicle body floor.

### <Seat frame F>

Next, a seat frame F1 will be described.

FIG. 3 is a perspective view of the seat frame F1. As shown in FIG. 3, the seat frame F1 includes, as main configurations, the cushion frame 10 forming the skeleton of the seat cushion 1; the back frame 20 forming the skeleton of the seat back 2; and the armrest frame 30 forming the skeleton of the armrest 5.

### <<Cushion frame 10>>

The cushion frame 10 is a substantially rectangular frame-shaped body, and is mainly composed of side frames 11, a front frame 12, a rear frame 13, a pan frame 14, and a pressure-receiving member 15. The side frames 11 are disposed on the right and left sides of the cushion frame 10. The front frame 12 and the rear frame 13 connect front end portions and rear portions of the side frames 11, respectively. In addition, the pan frame 14 having a plate shape is spanned between front portions of the side frames 11. The pressure-receiving member 15 is spanned between the pan frame 14 and the rear frame 13, and extends in a meandering manner.

Rear end portions of the side frames 11 are connected to the back frame 20 via a cushion connecting bracket 28.

A cushion rotating device 16 that rotatably connects the cushion frame 10 to the back frame 20 is attached to the rear end portions of the side frames 11.

In addition, support legs 17 that connect the cushion frame 10 to the vehicle body floor and that support the cushion frame 10 from below are attached to front end portions of the front frame 12.

### <<Back frame 20>>

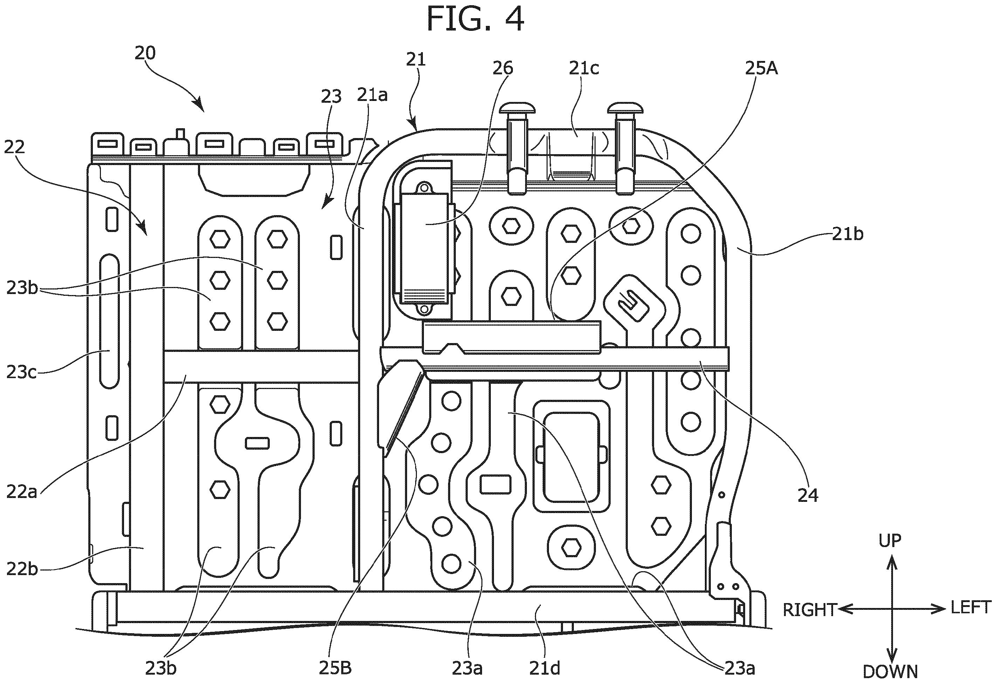

As shown in FIGS. 3 and 4, the back frame 20 is mainly composed of a main frame 21 that is a substantially rectangular frame-shaped body; a sub-frame 22; a panel frame 23 having a plate shape; and a connecting frame 24. The main frame 21 and the sub-frame 22 having a T-shape are disposed to align with each other in the seat width direction. The connecting frame 24 connects right and left side frames 21a and 21b constituting side portions of the main frame 21 in the seat width direction.

The main frame 21 and the sub-frame 22 are attached to a front surface of the panel frame 23 by welding.

The main frame 21 is mainly composed of the right and left side frames 21a and 21b; an upper frame 21c that connects upper end portions of the right and left side frames 21a and 21b; and a lower frame 21d that connects lower end portions of the right and left side frames 21a and 21b. The right and left side frames 21a and 21b, the upper frame 21c, and the lower frame 21d are made of a pipe material, and are fixed to each other by welding.

The lower frame 21d is a member that is longer in the seat width direction than the upper frame 21c, and extends to the sub-frame 22.

A plurality of substantially flat surfaces are formed on a front surface of the upper frame 21c at a predetermined distance from each other in the seat width direction. A pair of headrest guides 3d for supporting the headrest pillar 3c are attached to portions where the substantially flat surfaces are formed.

A reinforcing bracket 25A, a reinforcing bracket 25B, and a damper member 26 are provided within the frame of the main frame 21. The reinforcing bracket 25A plays a role in connecting the panel frame 23 and the connecting frame 24 and reinforcing the back frame 20. The reinforcing bracket 25B plays a role in connecting the side frame 21a and the connecting frame 24 and reinforcing the back frame 20. The damper member 26 plays a role in absorbing an impact on the seat back 2.

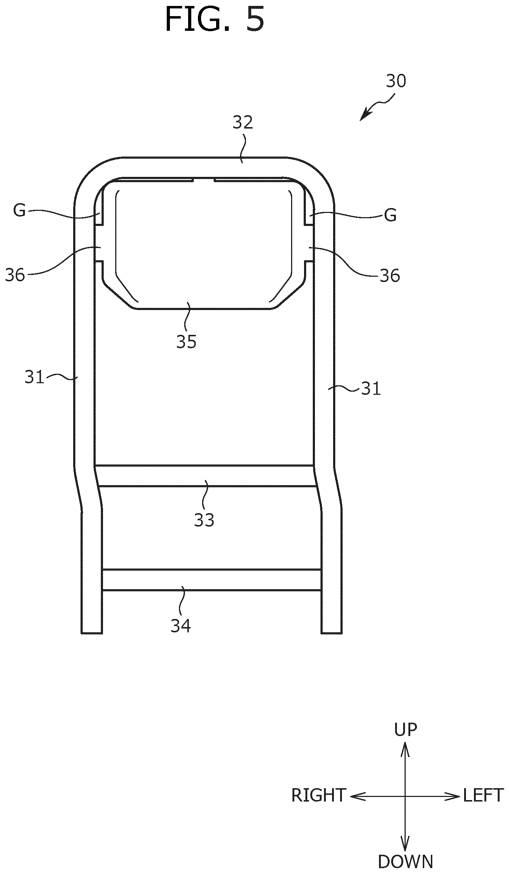

An arm connecting bracket 27 for connection to the armrest frame 30 is attached to a lower end portion of the inner side frame 21a. The arm connecting bracket 27 rotatably supports a proximal end frame 34 of the armrest frame 30 that will be described later with reference to FIG. 5.

The cushion connecting bracket 28 for connection to the cushion frame 10 is attached to a lower end portion of the outer side frame 21b. The cushion connecting bracket 28 is a plate-shaped member including a step, and is attached to the main frame 21 at an upper end portion of the cushion connecting bracket 28, and a lower end portion of the cushion connecting bracket 28 is attached to a cushion frame 10 side.

A plurality of base connecting brackets 29 are attached to a lower end portion of the lower frame 21d. The base connecting brackets 29 plays a role in connecting the main frame 21 to a base member that fixes the vehicle seat S1 onto the vehicle body floor.

The sub-frame 22 is mainly composed of a horizontal sub-frame 22a extending in the seat width direction, and a vertical sub-frame 22b that is connected to one end portion of the horizontal sub-frame 22a in an extending direction, and that extends lengthwise in a height direction of the back frame 20. The horizontal sub-frame 22a and the vertical sub-frame 22b are made of a polygonal pipe material.

The horizontal sub-frame 22a is disposed at a substantially central portion of the back frame 20 in the height direction. In addition, the horizontal sub-frame 22a is disposed to connect the side frame 21a of the main frame 21 and the vertical sub-frame 22b.

The vertical sub-frame 22b is disposed at one of both end portions of the back frame 20 in the seat width direction, which is on the side opposite to a main frame 21 side. A lower end portion of the vertical sub-frame 22b and an extension end portion of the lower frame 21d are connected by welding.

As shown in FIG. 4, a plurality of reinforcing protrusions 23a protruding toward the main frame 21 are formed at portions of the panel frame 23 on the side to which the main frame 21 is attached. In detail, the reinforcing protrusions 23a are formed at portions of the panel frame 23, to which the main frame 21, the connecting frame 24, and the reinforcing bracket 25A are attached. For that reason, the rigidity of assembly of the main frame 21, the connecting frame 24, and the reinforcing bracket 25A to the panel frame 23 can be improved.

In addition, a plurality of reinforcing protrusions 23b protruding toward the sub-frame 22 are formed at a portion of the panel frame 23 on the side to which the sub-frame 22 is attached. The plurality of reinforcing protrusions 23b are disposed to sandwich the horizontal sub-frame 22a therebetween in the height direction of the back frame 20. For that reason, the rigidity of the sub-frame 22 can be further improved.

In addition, a reinforcing bead 23c extending in the height direction of the back frame 20 is formed at a portion of the panel frame 23 on the side to which the sub-frame 22 is attached. The reinforcing bead 23c extends in the up to down direction along an outer peripheral portion on the inner side of the panel frame 23 in the seat width direction. The vertical sub-frame 22b is disposed to be sandwiched between the reinforcing bead 23c and the horizontal sub-frame 22a in the seat width direction. For that reason, the rigidity of the sub-frame 22 can be further improved.

<<Armrest frame 30>>

As shown in FIGS. 3 and 5, the armrest frame 30 is a substantially inverted U-shaped frame, and includes, as main configurations, right and left side frames 31, a distal end frame 32, an intermediate frame 33, the proximal end frame 34, and a support plate 35. The side frames 31, the distal end frame 32, the intermediate frame 33, and the proximal end frame 34 are made of a pipe material. Meanwhile, the support plate 35 is a plate member.

The side frames 31 are located at both end portions of the armrest frame 30 in the right to left direction, and extend parallel to each other. The distal end frame 32 and the proximal end frame 34 connect distal end portions (corresponding to upper end portions in the stored state shown in FIG. 1) and proximal end portions (corresponding to lower end portions in the stored state shown in FIG. 1) of the right and left side frames 31 in a longitudinal direction. In addition, between the distal end frame 32 and the proximal end frame 34, the intermediate frame 33 and the support plate 35 are interposed between the right and left side frames 31. The right and left side frames 31 correspond to a pair of parallel frames, and the distal end frame 32 corresponds to a connecting frame.

A pair of sub-headrest guides 4d for supporting a sub-headrest pillar 4c are attached to portions of the distal end frame 32 facing the rear of the seat (refer to FIG. 3). Namely, the sub-headrest 4 is attached to the armrest frame 30.

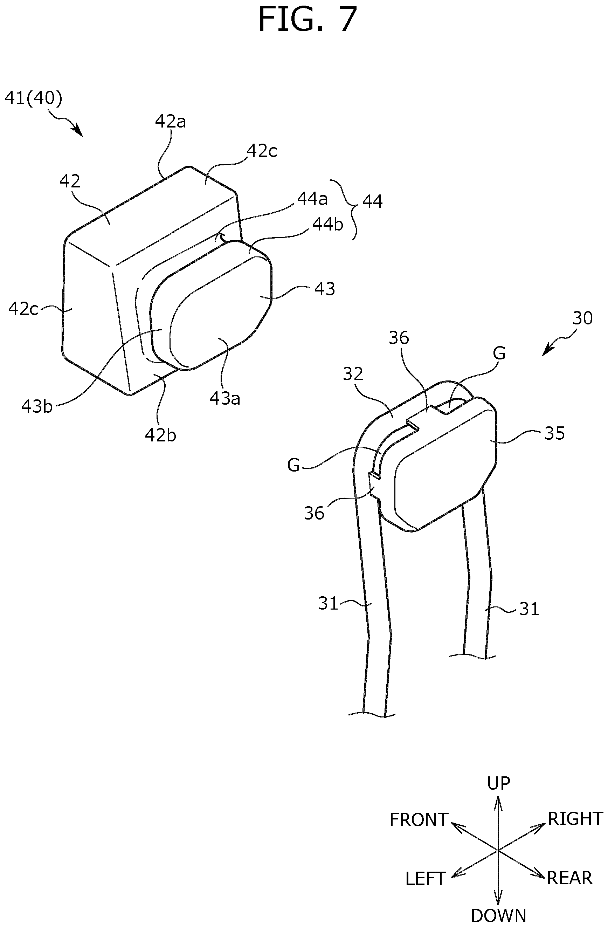

As shown in FIGS. 5 and 7, the support plate 35 includes a central portion that is flat, and bent portions that are bent forward at an upper edge and right and left side edges of the support plate 35. In other words, in the support plate 35, an accommodation recess that accommodates and supports a first armrest pad 41 to be described later is formed by the central portion and the bent portions.

In addition, a gap G is formed between the support plate 35 and both the right and left side frames 31 and the distal end frame 32. Furthermore, the support plate 35 is attached to the side frames 31 and the distal end frame 32 by support plate connecting pieces 36 interposed in the gap G. In such a manner, by forming the gap G between the support plate 35 and both the side frames 31 and the distal end frame 32, the volume of the first armrest pad 41 can be increased, and the impact absorption performance of the first armrest pad 41 can be enhanced. The support plate connecting pieces 36 corresponds to connecting members.

Returning to FIG. 3, the armrest frame 30 is attached to the front of the back frame 20, more specifically, to the front of the sub-frame 22 by pivotally supporting the proximal end frame 34 via the arm connecting bracket 27. The armrest frame 30 is rotationally movable about the proximal end frame 34 serving as a rotating shaft between the stored position and the deployed position.

### <Attachment structure of armrest pad 40>

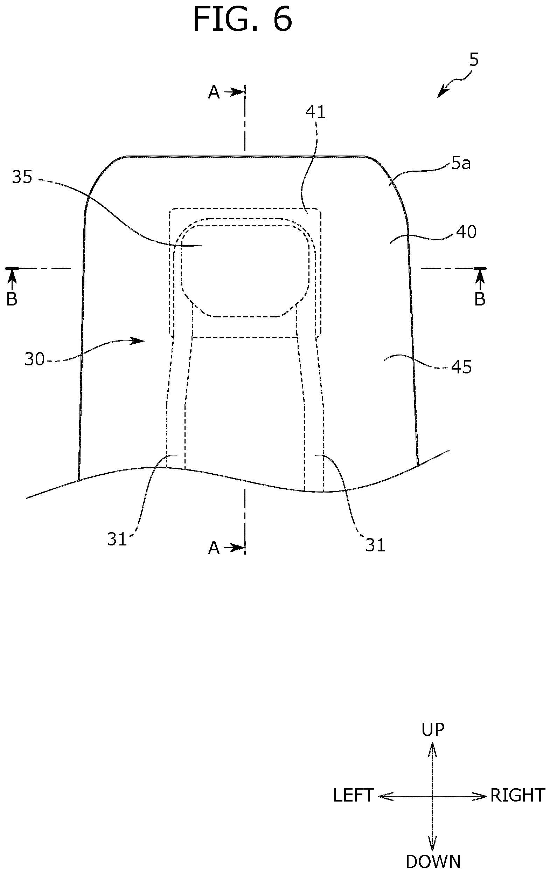

Next, an attachment structure of the armrest pad 40 to the armrest frame 30 will be described with reference to FIGS. 6 to 10.

FIG. 6 shows a rear transparent view of the armrest 5 in the stored state. As described above, the armrest frame 30 has a substantially inverted U-shape. The armrest pad 40 is attached to the armrest frame 30 to cover the armrest frame 30.

The armrest pad 40 is composed of the first armrest pad 41 that is a molded body made of expanded polypropylene, and a second armrest pad 45 that is a molded body made of expanded polyurethane. The first armrest pad 41 is attached to an upper portion of the armrest frame 30 via an attachment portion 43 to be described later. The first armrest pad 41 has a smaller amount of deformation under load than the second armrest pad 45. In other words, the first armrest pad 41 has better impact absorption performance than the second armrest pad 45.

The second armrest pad 45 is molded by covering the armrest frame 30 and the first armrest pad 41 with the skin material 5a, and then foaming and expanding polyurethane. For that reason, the second armrest pad 45 covers the entirety of the armrest frame 30 and the first armrest pad 41. The second armrest pad 45 has higher flexibility than the first armrest pad 41.

In such a manner, the armrest pad 40 is composed of a combination of molded bodies made of resin materials having different properties (hardness, namely, deformation properties under load). Therefore, both the safety and comfort of the seated occupant can be achieved by the impact absorption of the first armrest pad 41 and the flexibility of the second armrest pad 45. The second armrest pad 45 corresponds to an outer pad material. In addition, the expanded polypropylene corresponds to a first resin material, and the expanded polyurethane corresponds to a second resin material.

FIG. 7 is an exploded perspective view of the armrest frame 30 and the first armrest pad 41 when viewed from the rear. As shown in FIG. 7, the first armrest pad 41 includes a body portion 42 having a substantially rectangular parallelepiped shape, and the attachment portion 43 protruding from the body portion 42 toward the rear of the seat. The body portion 42 and the attachment portion 43 are integrally formed.

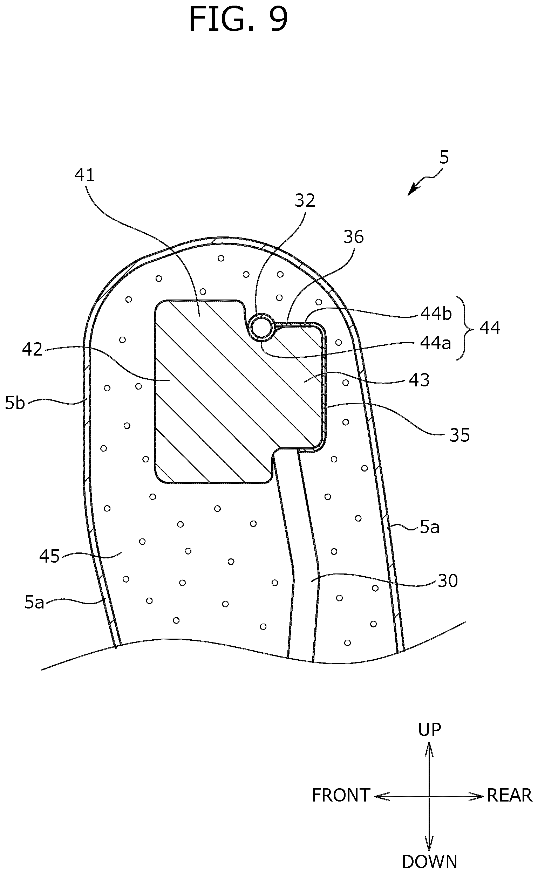

When the first armrest pad 41 is attached to the armrest frame 30, the body portion 42 is located in front of the armrest frame 30, and receives a load from the back of the seated occupant (refer to FIG. 9). In detail, the body portion 42 is located between a support surface 5b that supports the seated occupant and the armrest frame 30, and receives a load from the back of the seated occupant, together with the second armrest pad 45. The body portion 42 corresponds to a pad body.

Returning to FIG. 7, the body portion 42 has a front surface 42a, a rear surface 42b, and an outer peripheral surface 42c composed of an upper surface, a lower surface, and right and left side surfaces. A dimension of the body portion 42 in the seat front to rear direction is larger than a dimension of the attachment portion 43 to be described later in the seat front to rear direction. However, the body portion 42 is not limited to having a substantially rectangular parallelepiped shape shown in FIG. 7. It is preferable that the body portion 42 can receive a load exerted by the seated occupant and has impact absorption performance required for the first armrest pad 41.

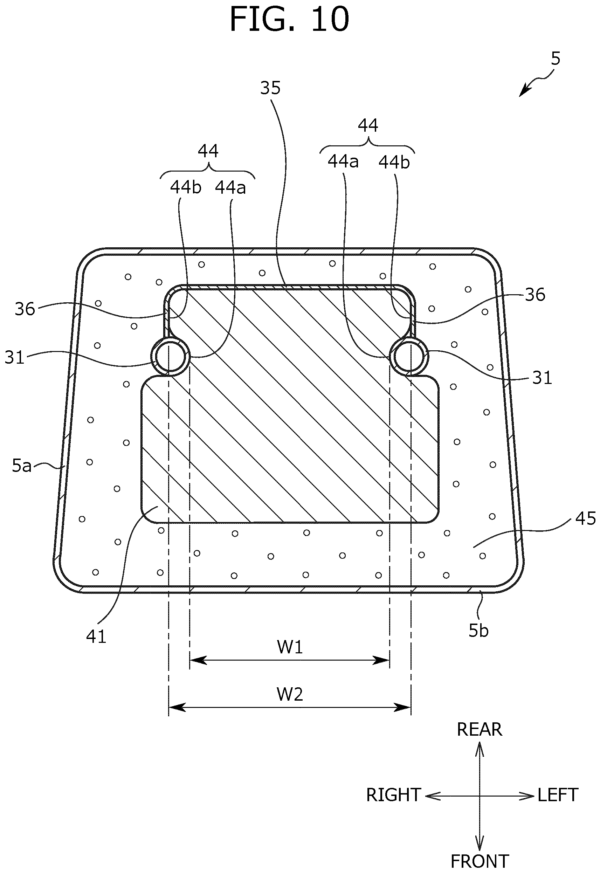

The attachment portion 43 has a supported surface 43a that abuts on the support plate 35, and a side surface 43b on which an engagement portion 44 that engages with the side frames 31 and the distal end frame 32 is formed. Recesses 44a and bulging portions 44b are formed in the engagement portion 44. A distance W1 between the recesses 44a in the seat width direction has a dimension substantially equal to a distance between the inner sides of the right and left side frames 31 (refer to FIG. 10). Meanwhile, the bulging portions 44b bulge further toward the outside of the side surface 43b than the recesses 44a. A distance W2 between the bulging portions 44b in the seat width direction has a dimension larger than the distance between the inner sides of the right and left side frames 31. In other words, the recesses 44a and the bulging portions 44b form a fitting groove into which the right and left side frames 31 and the distal end frame 32 can be fitted.

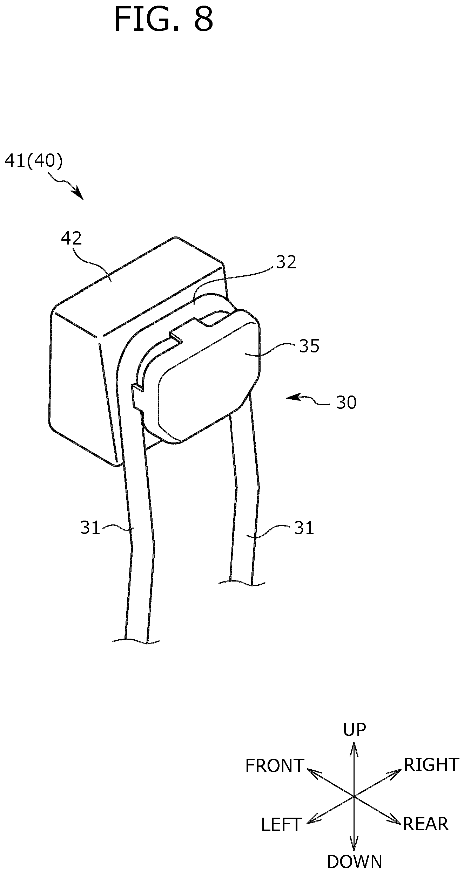

The flow of attachment work and dismantling work for the armrest frame 30 and the first armrest pad 41 described above will be described with reference to FIGS. 7 and 8.

When the first armrest pad 41 is attached to the armrest frame 30, first, the bulging portions 44b are pressed from the right and left to deform the bulging portions 44b such that the bulging portions 44b can pass between the right and left side frames 31. Next, the bulging portions 44b are inserted between the right and left side frames 31, and are located such that the supported surface 43a of the attachment portion 43 abuts on the support plate 35. Finally, the first armrest pad 41 is pressed into the armrest frame 30 such that the right and left side frames 31 and the distal end frame 32 are fitted into the recesses 44a of the engagement portion 44. Accordingly, the attachment work of the first armrest pad 41 to the armrest frame 30 is completed.

Here, as shown in FIG. 7, the engagement portion 44 is continuously formed along the right and left side frames 31 and the distal end frame 32. In addition, as shown in FIG. 9, in a state where the first armrest pad 41 is attached to the armrest frame 30, the bulging portions 44b bulge to overlap the distal end frame 32 in the front to rear direction perpendicular to the support surface 5b. For that reason, the state of engagement between the engagement portion 44 and the armrest frame 30 can be prevented from being inadvertently released.

In addition, as shown in FIG. 10, the bulging portions 44b bulge to overlap the right and left side frames 31 in the front to rear direction perpendicular to the support surface 5b. For that reason, the state of engagement between the engagement portion 44 and the armrest frame 30 can be prevented from being inadvertently released.

In addition, as shown in FIGS. 9 and 10, when the first armrest pad 41 is attached to the armrest frame 30, the attachment portion 43 is supported to be accommodated in the support plate 35. For that reason, the first armrest pad 41 can be more appropriately positioned and supported with respect to the armrest frame 30.

Here, the gap G is formed between the support plate 35 and both the right and left side frames 31 and the distal end frame 32 (refer to FIG. 7). In other words, the support plate 35 is attached at a position separated from the side frames 31 in a direction further away from the support surface 5b than the side frames 31. For that reason, a dimension between the bulging portions 44b in the seat front to rear direction can be made larger than a dimension between the recesses 44a in the seat front to rear direction. Accordingly, the first armrest pad 41 can be stably attached to the armrest frame 30, and the impact absorption performance of the first armrest pad 41 can be enhanced.

Meanwhile, when the first armrest pad 41 is dismantled from the armrest frame 30, first, the bulging portions 44b are pressed and deformed to shrink. Next, the first armrest pad 41 is displaced to slide downward with respect to the armrest frame 30. Accordingly, the engagement between the engagement portion 44 and the armrest frame 30 is released. In such a manner, the first armrest pad 41 can be removed from the armrest frame 30. Compared to when the armrest pad 40 is fixed using an adhesive in the related art, the first armrest pad 41 can be easily separated by releasing the state of engagement between the armrest frame 30 and the first armrest pad 41. For that reason, the separation work of the armrest pad 40 can be efficiently performed. Incidentally, since the separation work of the second armrest pad 45 is the same as in the related art, a detailed description thereof will be omitted.

In addition, as shown in FIG. 7, the engagement portion 44 is formed inside the outer peripheral surface 42c (on a center side of the outer peripheral surface 42c) of the body portion 42. For that reason, an increase in the size of the first armrest pad 41 can be suppressed by forming the engagement portion 44.

### <Modification example>

In the above-described embodiment, the support plate 35 has been described as being attached at a position separated from the armrest frame 30 in the direction further away from the support surface 5b than the armrest frame 30; however, the present invention is not limited thereto.

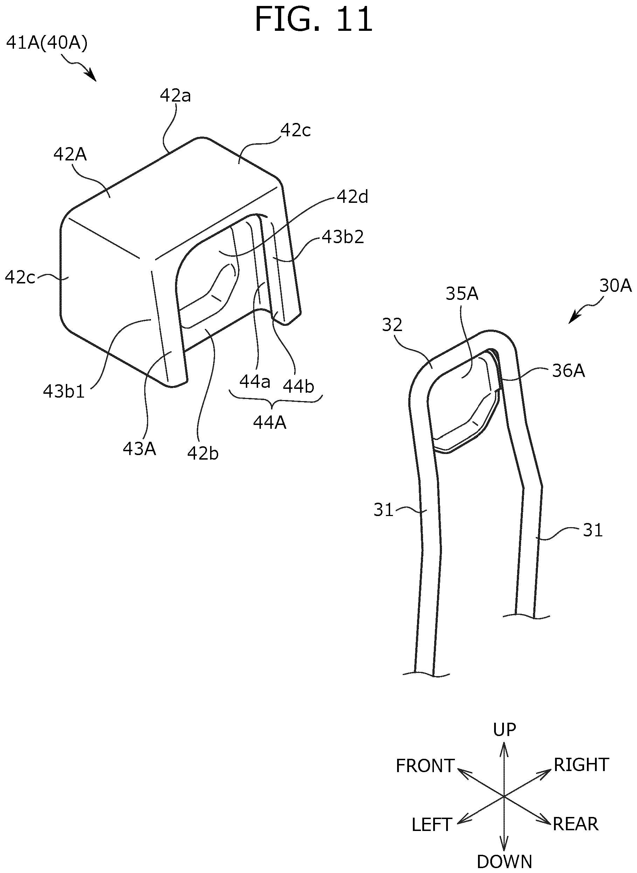

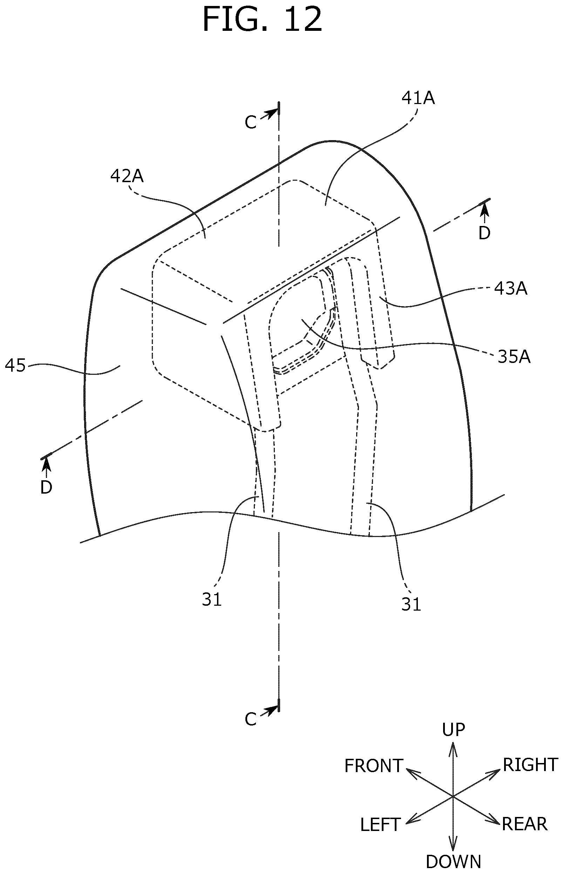

FIGS. 11 to 14 show an armrest frame 30A and a first armrest pad 41A according to a modification example. As shown in FIG. 11, a support plate 35A of the armrest frame 30A according to the modification example is attached at a position separated from the side frames 31 in a direction further toward the support surface 5b than the side frames 31.

In addition, the first armrest pad 41 according to the modification example includes a body portion 42A having a substantially rectangular parallelepiped shape, and an attachment portion 43A protruding from the body portion 42A toward the rear of the seat. The body portion 42A and the attachment portion 43A are integrally formed.

The body portion 42A has the front surface 42a, the rear surface 42b, and the outer peripheral surface 42c composed of an upper surface, a lower surface, and right and left side surfaces. An accommodation recess 42d that accommodates the support plate 35A is formed on the rear surface 42b.

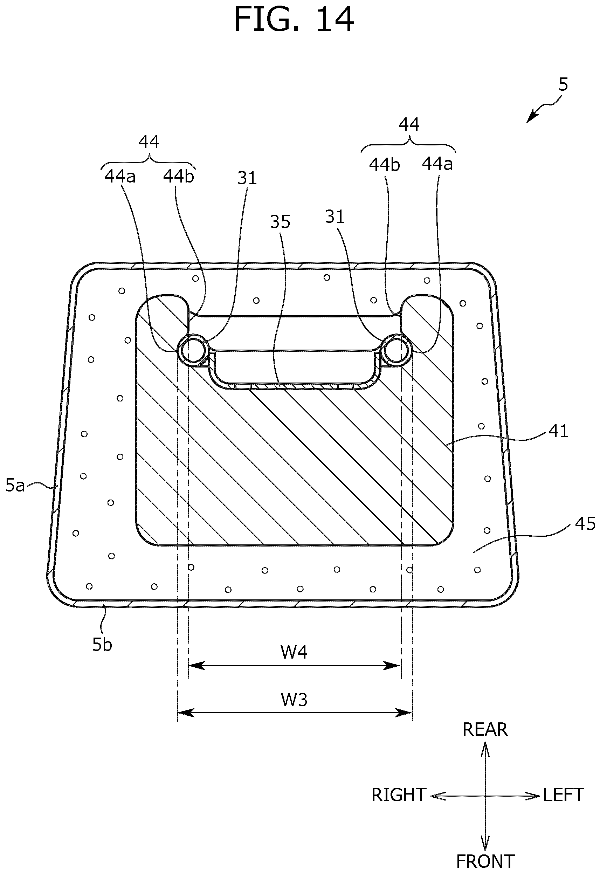

The attachment portion 43A extends rearward from an outer peripheral portion of the rear surface 42b of the body portion 42A. The attachment portion 43A has an outer surface 43b1 formed to be flush with the outer peripheral surface 42c of the body portion 42A, and an inner surface 43b2 on which an engagement portion 44A that engages with the side frames 31 and the distal end frame 32 is formed. The recesses 44a and the bulging portions 44b are formed in the engagement portion 44A. Furthermore, a distance W3 between the recesses 44a in the seat width direction has a dimension substantially equal to a distance between the outer sides of the right and left side frames 31 (refer to FIG. 14). Meanwhile, the bulging portions 44b bulge further toward the inside of the side surface 43b than the recesses 44a. A distance W4 between the bulging portions 44b in the seat width direction has a dimension smaller than the distance between the outer sides of the right and left side frames 31. In other words, the recesses 44a and the bulging portions 44b form a fitting groove into which the side frames 31 and the distal end frame 32 can be fitted. Incidentally, a dimension between the recesses 44a in the seat front to rear direction is larger than a dimension of the accommodation recess 42d in the seat front to rear direction.

The flow of attachment work and dismantling work for the armrest frame 30A and the first armrest pad 41A described above will be described.

When the first armrest pad 41A is attached to the armrest frame 30A, first, the first armrest pad 41A is positioned above the armrest frame 30A, and positioning is performed such that the right and left side frames 31 and the right and left recesses 44a are aligned upward and downward. Next, the first armrest pad 41A is displaced with respect to the armrest frame 30A such that the right and left recesses 44a move downward along the right and left side frames 31. Finally, the first armrest pad 41A is pressed into the armrest frame 30A such that the distal end frame 32 is fitted into the recess 44a of the engagement portion 44. At this time, the support plate 35A is accommodated in the accommodation recess 42d. Accordingly, the attachment work of the first armrest pad 41A to the armrest frame 30A is completed.

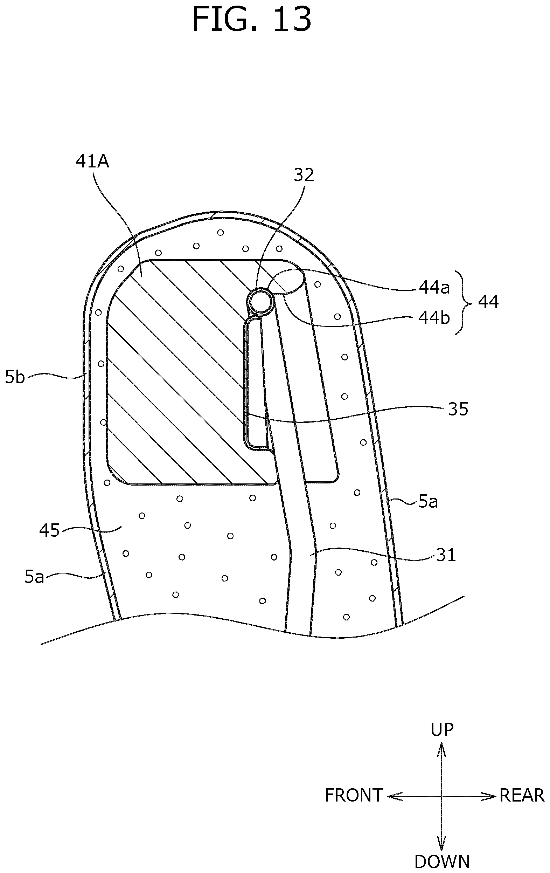

Here, as shown in FIG. 11, the engagement portion 44A is continuously formed along the right and left side frames 31 and the distal end frame 32. In addition, as shown in FIG. 13, in a state where the first armrest pad 41A is attached to the armrest frame 30A, the bulging portions 44b bulge to overlap the distal end frame 32 in the front to rear direction perpendicular to the support surface 5b.

In addition, as shown in FIG. 14, the bulging portions 44b bulge to overlap the right and left side frames 31 in the front to rear direction perpendicular to the support surface 5b. For that reason, the state of engagement between the engagement portion 44A and the armrest frame 30A can be prevented from being inadvertently released.

In addition, the first armrest pad 41A is attached and engaged with the armrest frame 30A to envelop the armrest frame 30A from the outside. For that reason, compared to the above-described embodiment, the first armrest pad 41A can be appropriately positioned and supported with respect to the armrest frame 30A.

Meanwhile, when the first armrest pad 41A is dismantled from the armrest frame 30A, first, the bulging portions 44b are deformed to expand to the right and left. Next, the first armrest pad 41 is displaced to slide downward with respect to the armrest frame 30. Accordingly, the engagement between the engagement portion 44A and the armrest frame 30A is released. In such a manner, the first armrest pad 41A can be removed from the armrest frame 30A. Similarly to the first embodiment described above, the first armrest pad 41A can be easily separated from the armrest frame 30A, and the separation work of the armrest pad 40A can be efficiently performed.

### <Second embodiment>

In the above-described embodiment, the case where the armrest pad 40 is dismantled from the armrest frame 30 has been described; however, in a second embodiment, a case where an ottoman pad 80 is dismantled from an ottoman frame 70 will be described.

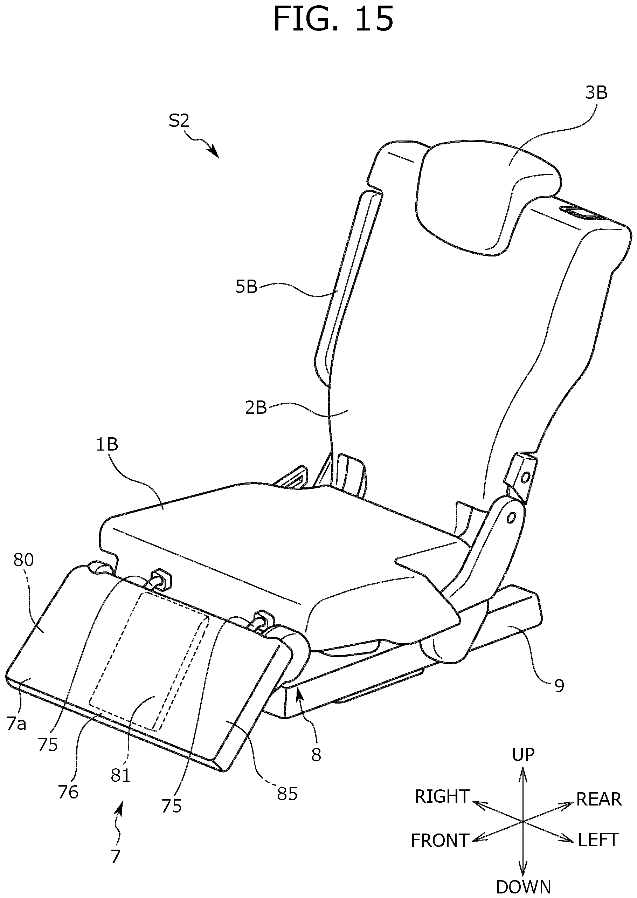

FIG. 15 shows a perspective view of a vehicle seat S2 according to the second embodiment.

As shown in FIG. 15, the vehicle seat S2 is mainly composed of a seat body including a seat cushion 1B, a seat back 2B, a headrest 3B, an armrest 5B, and an ottoman 7. The vehicle seat S2 is installed on the vehicle body floor to be movable forward and rearward via a slide mechanism 9.

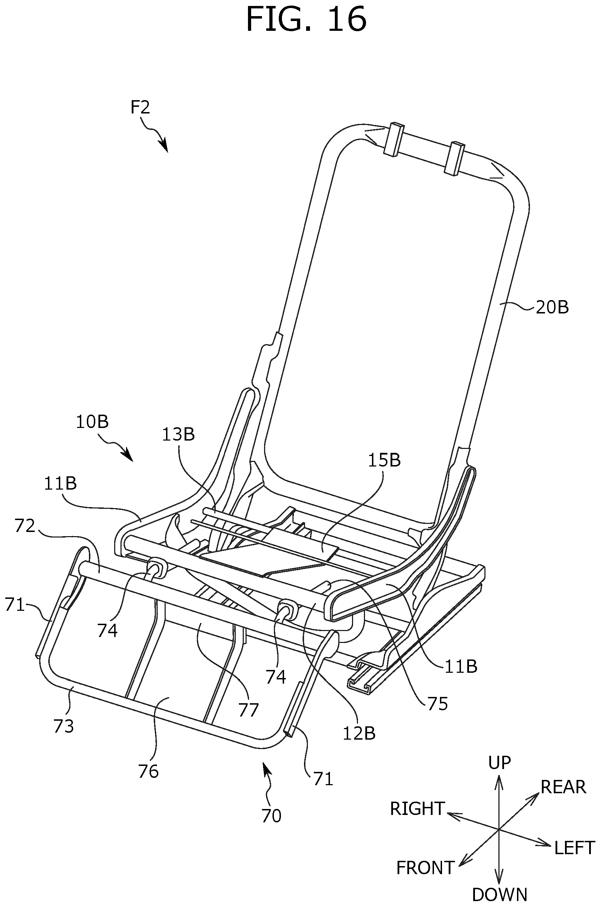

The ottoman 7 is a support member that supports the lower legs of the seated occupant. The ottoman 7 includes, as main configurations, the ottoman frame 70 forming the skeleton of the ottoman 7 (refer to FIG. 16); the ottoman pad 80 that covers the ottoman frame 70; and a skin material 7a that covers the ottoman frame 70 and the ottoman pad 80. The ottoman pad 80 is composed of a first ottoman pad 81 that is attached to the ottoman frame 70, and a second ottoman pad 85 that covers the entirety of the ottoman frame 70 and the first ottoman pad 81.

In addition, the ottoman 7 can hold a posture (rotation angle with respect to the seat cushion 1B) according to an operation by the seated occupant through an angle adjustment mechanism 8. A known mechanism can be adopted as the angle adjustment mechanism 8.

FIG. 16 is a perspective view of a seat frame F2 built into the seat body. The seat frame F2 includes, as main configurations, a cushion frame 10B forming the skeleton of the seat cushion 1B; a back frame 20B forming the skeleton of the seat back 2B; and the ottoman frame 70 forming the skeleton of the ottoman 7.

The cushion frame 10B is a substantially rectangular frame body, and is mainly composed of right and left side frames 11B; a front frame 12B and a rear frame 13B that connect front end portions and rear portions of the right and left side frames 11B, respectively; and a pressure-receiving member 15B.

The ottoman frame 70 is a substantially rectangular frame body, and includes right and left ottoman side frames 71; an ottoman base frame 72 that connects proximal end portions and distal end portions of the right and left ottoman side frames 71; and an ottoman front frame 73.

A pair of right and left ottoman pillars 74 are provided on the ottoman base frame 72 at a distance from each other on the right and left. The right and left ottoman pillars 74 extend parallel to each other. The ottoman pillars 74 are inserted into ottoman pillar support portions 75 provided on the front frame 12B of the cushion frame 10B. Accordingly, the ottoman frame 70 is attached to the cushion frame 10B.

A support plate 76 is attached to the ottoman base frame 72 and the ottoman front frame 73 via a support plate connecting piece 77. The support plate 76 is a plate-shaped member, and closes a central portion of the ottoman frame 70, which has a frame shape, in the right to left direction. In FIG. 16, the support plate 76 closes only the central portion of the ottoman frame 70 in the right to left direction; however, the present invention is not limited thereto. The support plate 76 may have a shape and dimensions that close the entirety of the substantially rectangular frame body formed by the ottoman frame 70.

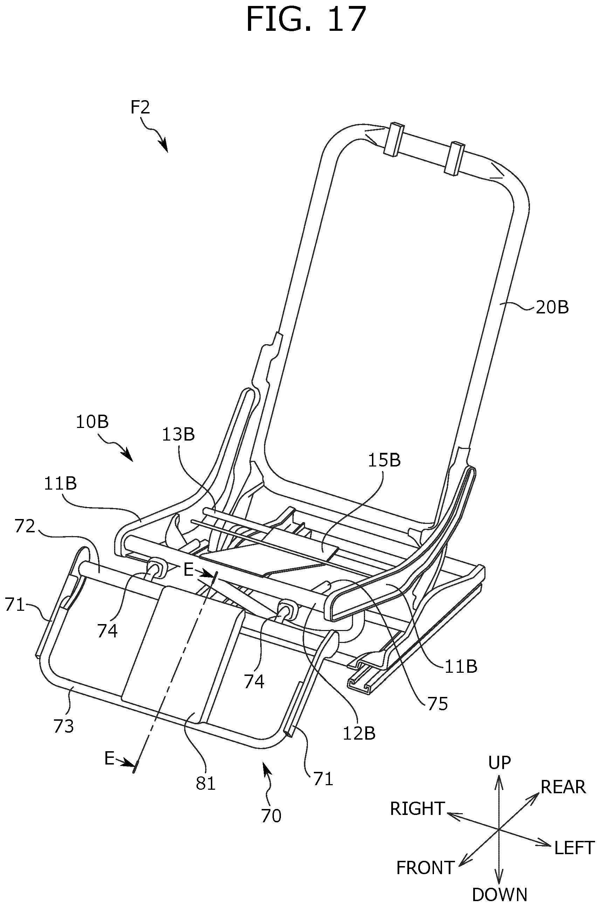

FIG. 17 is a perspective view of the seat frame F2 in a state where the first ottoman pad 81 is attached to the support plate 76. The first ottoman pad 81 is a molded body made of expanded polypropylene. Meanwhile, the second ottoman pad 85 (refers to FIG. 15) that covers the first ottoman pad 81 is a molded body made of expanded polyurethane. The first ottoman pad 81 has a smaller amount of deformation under load than the second ottoman pad 85. In other words, the first ottoman pad 81 has better impact absorption performance than the second ottoman pad 85.

The second ottoman pad 85 covers the entirety of the ottoman frame 70 and the first ottoman pad 81. The second ottoman pad 85 has higher flexibility than the first ottoman pad 81.

In such a manner, the ottoman pad 80 is configured by combining molded bodies made of resin materials having different properties. Therefore, optimal seating characteristics can be provided to the seated occupant. The second ottoman pad 85 corresponds to an outer pad material.

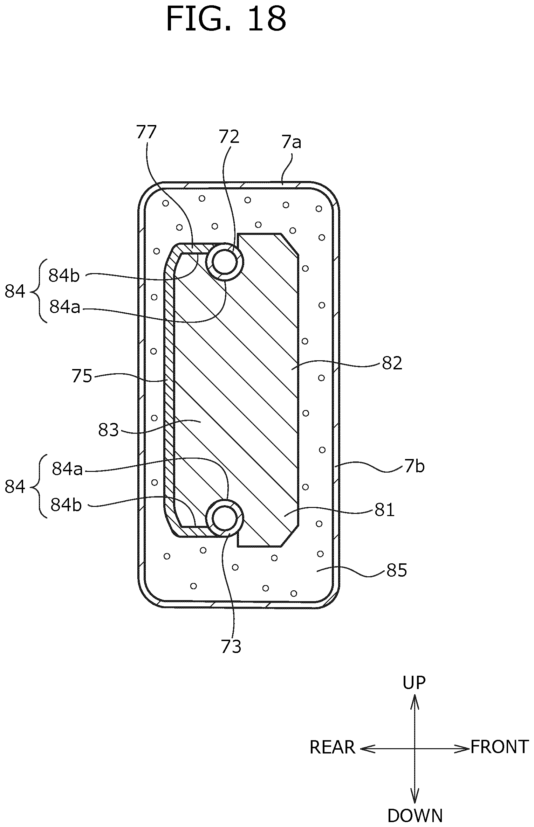

FIG. 18 shows a cross-sectional view taken along line E-E of FIG. 17. In addition, for convenience of description, a state where the ottoman 7 is adjusted to a rotation angle perpendicular to the vehicle body floor is shown. As shown in FIG. 18, the first ottoman pad 81 includes a body portion 82 and an attachment portion 83 protruding from the body portion 82 in a direction separated from a support surface 7b. The body portion 82 and the attachment portion 83 are integrally formed.

When the first ottoman pad 81 is attached to the ottoman frame 70, the body portion 82 receives a load from the lower legs of the seated occupant. In more detail, the body portion 82 is located between the support surface 7b that supports the seated occupant and both the ottoman base frame 72 and the ottoman front frame 73, and receives a load from the lower legs of the seated occupant, together with the second ottoman pad 85.

An engagement portion 84 that engages with the ottoman frame 70 is formed at a side portion of the attachment portion 83. Recesses 84a and bulging portions 84b are formed in the engagement portion 84. A distance between the recesses 84a has a dimension substantially equal to a distance between the inner sides of the ottoman base frame 72 and the ottoman front frame 73. Meanwhile, the bulging portions 84b bulge further upward and downward than the recesses 84a. Furthermore, a distance between the bulging portions 84b has a dimension larger than the distance between the inner sides of the ottoman base frame 72 and the ottoman front frame 73. In other words, the recesses 84a and the bulging portions 84b form a fitting groove into which the ottoman base frame 72 and the ottoman front frame 73 can be fitted. Therefore, in a state where the first ottoman pad 81 is attached to the ottoman frame 70, the state of engagement of the engagement portion 84 with the ottoman frame 70 can be prevented from being inadvertently released.

Since the flow of attachment work and dismantling work for the ottoman frame 70 and the first ottoman pad 81 described above is similar to that of the above-described embodiment, a detailed description thereof will be omitted. Similarly to the above-described embodiment, the first ottoman pad 81 can be easily separated from the ottoman frame 70, and the separation work of the ottoman pad 80 can be efficiently performed.

In the above-described embodiment, the armrest 5 and the ottoman 7 have been described as examples of a support member including a frame and a pad material; however, the present invention is not limited thereto. It is preferable that the frame and the pad material can be easily separated from each other in the dismantling work of the support member, and the present invention may be applied to support members other than the armrest 5 and the ottoman 7.

In addition, in the above-described embodiment, the first armrest pad 41 has been described as being a molded body made of expanded polypropylene, and the second armrest pad 45 has been described as being a molded body made of expanded polyurethane; however, the present invention is not limited thereto. It is preferable that the first armrest pad 41 and the second armrest pad 45 are resin molded bodies capable of supporting the load of the seated occupant and providing comfort to the seated occupant.

In addition, in the above-described embodiment, the first armrest pad 41 and the second armrest pad 45 have been described as having different hardnesses (amount of deformation under load); however, the present invention is not limited thereto. It is preferable that by combining a plurality of types of pad materials, diversity and flexibility can be provided in the properties of the pad materials and optimal seating comfort including safety can be provided.

### <Third embodiment>

Hereinafter, a conveyance seat S101 according to a third embodiment will be described.

A vehicle seat that reduces a load on the neck of an occupant when a conveyance such as an automobile is rear-ended (rear-end collision) is known. PATENT LITERATURE (JP H10-181401 A) discloses an active headrest that moves closer to the head of an occupant in the event of a rear-end collision, or a technology in which a part of a seat back frame moves to allow the body of an occupant to sink into a seat back.

However, the technology described in JP H10-181401 A requires the provision of a mechanism for moving the headrest or a part of the seat back frame. For that reason, the structure of the conveyance seat is complicated, and weight and cost are increased, which are problems.

Therefore, an object of the present invention is to provide a conveyance seat including a headrest or a seat back that reduces an impact in the event of a collision with a simple structure, and that suppresses a load on the neck of an occupant.

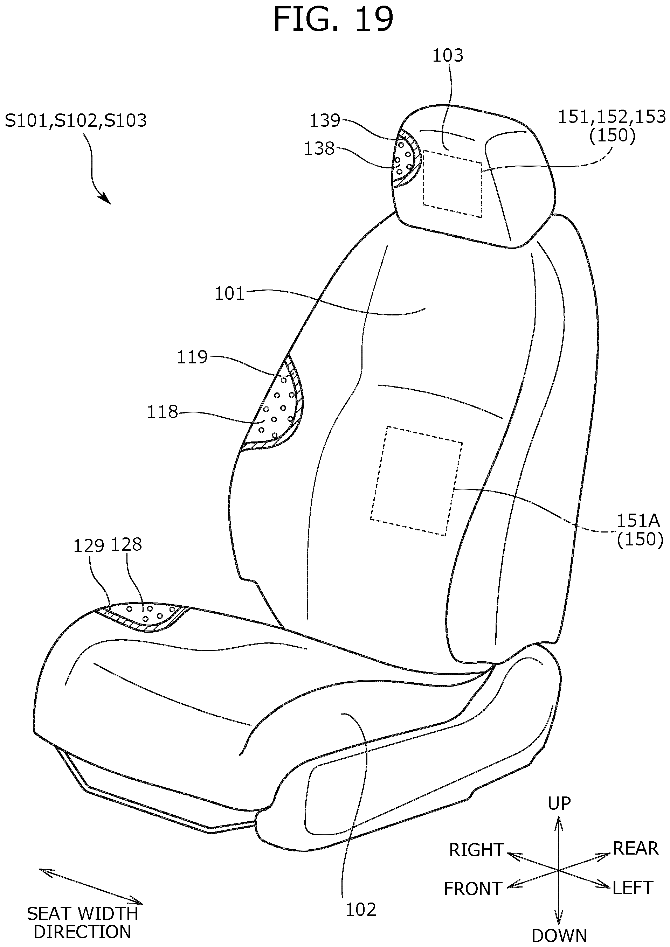

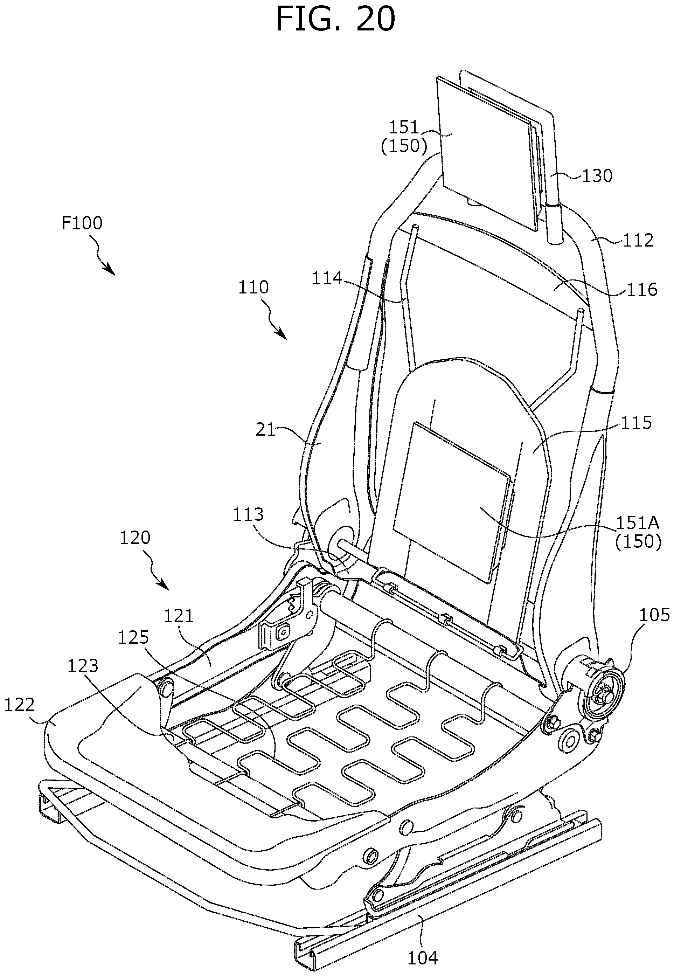

FIG. 19 is a perspective view of the conveyance seat S101 when viewed obliquely from the front, FIG. 20 is a perspective view showing a seat frame F100 of the conveyance seat S101, and in FIG. 19, for convenience of illustration, a part of the conveyance seat S101 is illustrated with skin members 119, 129, and 139 removed.

The conveyance seat S101 is a seat which is placed on a vehicle body floor of a vehicle, and in which an occupant H of the vehicle is seated. In the present embodiment, the conveyance seat S101 is used as a front seat of the vehicle. However, the conveyance seat S101 is not limited thereto, and the conveyance seat S101 may be a rear seat of the vehicle, and can also be used as a middle seat in a second row or a rear seat in a third row of a vehicle including three rows of seats in the front to rear direction.

As shown in FIG. 19, the conveyance seat S101 includes, as main components, a seat back 101 serving as a backrest that supports the back of the occupant H; a seat cushion 102 serving as a seating portion that supports the buttocks of the occupant H; and a headrest 103 that supports the head of the occupant H. In the present embodiment, the headrest 103 is provided at an upper end portion of the seat back 101 such that the up and down position thereof can be adjusted. In addition, the seat cushion 102 and the seat back 101 are connected to each other with a reclining device 105 (refer to FIG. 20) sandwiched therebetween. In addition, a slide device 104 is installed under the seat cushion 102, and the conveyance seat S101 is placed on the vehicle body floor in a state where the conveyance seat S101 is movable in a sliding manner in the front to rear direction by the slide device 104 (refer to FIG. 20).

The seat frame F100 shown in FIG. 20 is provided inside the conveyance seat S101, and the seat frame F100 is mainly composed of a back frame 110, a cushion frame 120, and a headrest pillar 130. The back frame 110 forms the skeleton of the seat back 101 in the seat frame F100, and the cushion frame 120 forms the skeleton of the seat cushion 102 in the seat frame F100. In addition, the headrest pillar 130 forms the skeleton of the headrest 103.

A lower end portion of the back frame 110 is connected to a rear end portion of the cushion frame 120 via the reclining device 105.

In addition, headrest holders that hold the headrest pillar 130 are provided at an upper end of the back frame 110, and the headrest 103 is attached to the headrest holders so as to be movable in the up to down direction.

The seat back 101 is configured by disposing a back pad 118 on the back frame 110, and covering the back pad 118 with the skin member 119. The seat cushion 102 is configured by placing a cushion pad 128 on the cushion frame 120, and covering the cushion pad 128 with the skin member 129.

The headrest 103 is configured by disposing a headrest pad 138 on the headrest pillar 130, and covering the headrest pad 138 with the skin member 139.

The back pad 118, the cushion pad 128, and the headrest pad 138 are made of, for example, a urethane base material molded by foam molding using a urethane foaming agent. In addition, the skin members 119, 129, and 139 are made of fabric, film, leather, sheet, or the like, and are attached to cover the back pad 118, the cushion pad 128, and the headrest pad 138, respectively, in a state where the skin members 119, 129, and 139 are stretched such that a predetermined tension is applied thereto.

In the present embodiment, as shown in FIG. 20, the cushion frame 120 has a substantially rectangular frame-shaped outer shape. Furthermore, the cushion frame 120 includes, as main components, a pair of cushion side frames 121 and 121 constituting right and left end portions of the cushion frame 120 in the seat width direction; a pan frame 122; a front pipe 123; a rear pipe 124; and springs 125. The pan frame 122 constitutes a front end portion of the cushion frame 120. The front pipe 123 and the rear pipe 124 connect rear end portions of the right and left cushion side frames 121 and 121. The springs 125 are provided to span between the front pipe 123 and the rear pipe 124.

The back frame 110 is mainly made of a pipe processed into a rectangular frame shape, and as shown in FIG. 20, the back frame 110 includes an upper frame 112 having an inverted U-shape; a pair of back side frames 111 and 111 forming right and left end portions of the back frame 110 in the seat width direction; and a lower frame 113 that connects lower end portions of the pair of back side frames 111 and 111. In addition, a connecting frame 116 that connects and supports portions of the upper frame 112, the portions extending upward and downward, is provided. A wire 114 that spans between the connecting frame 116 and the lower frame 113 is provided, and a pressure-receiving member 115 is attached to the wire 114. In addition, an impact absorber 151A that is an impact-reducing portion 150 is attached to a front surface of the pressure-receiving member 115.

In addition, the headrest 103 is provided with the headrest pillar 130 serving as a headrest frame constituting the skeleton of the headrest 103 described above. The headrest pillar 130 is formed in an inverted U-shape when viewed from the front, and a pressure-receiving plate 131 is attached inside the U-shape. In addition, similarly to the impact absorber 151A attached to the pressure-receiving member 115 of the back frame 110, an impact absorber 151 is attached to a front surface of the pressure-receiving plate 131. Details of the impact absorber 151 will be described later.

Examples of the constituent materials of members constituting the back frame 110, the cushion frame 120, and the headrest pillar 130 include a material having sufficient rigidity so as not to deform significantly when the material receives a load, for example, a metal material such as a steel material or an aluminum alloy. Joining means for the members constituting the back frame 110 and the cushion frame 120 is welding; however, a combination of joining using bolts or adhesive may be used as the joining means.

### <First example>

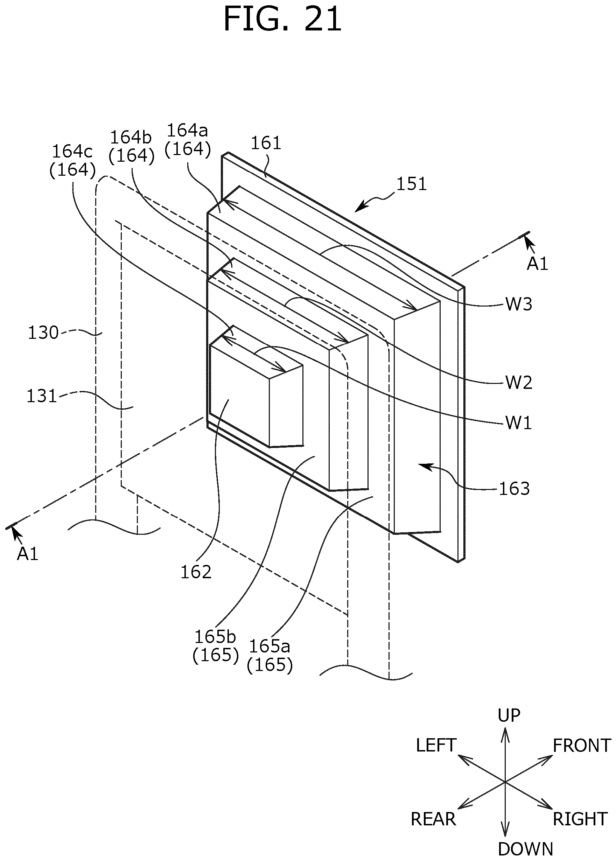

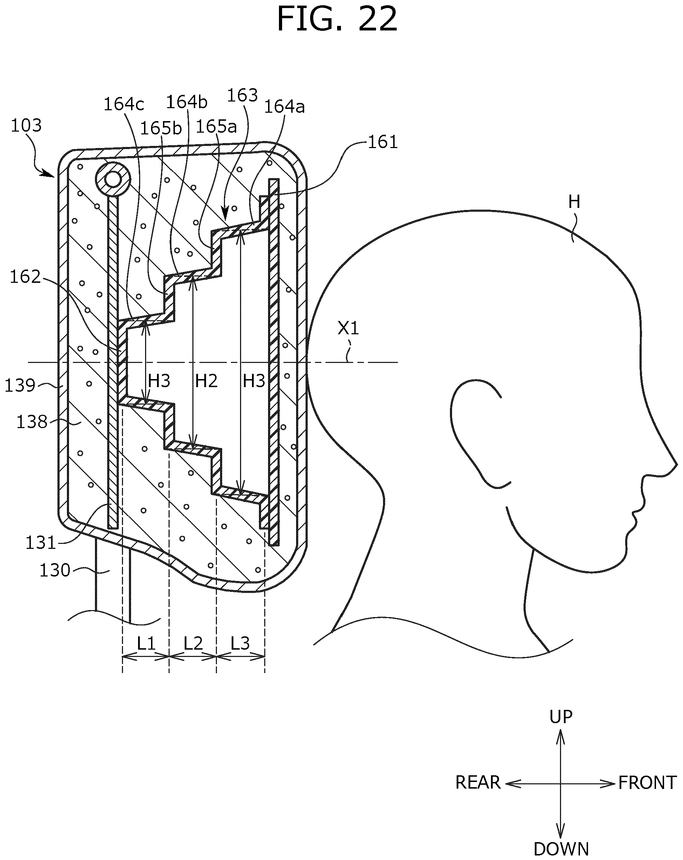

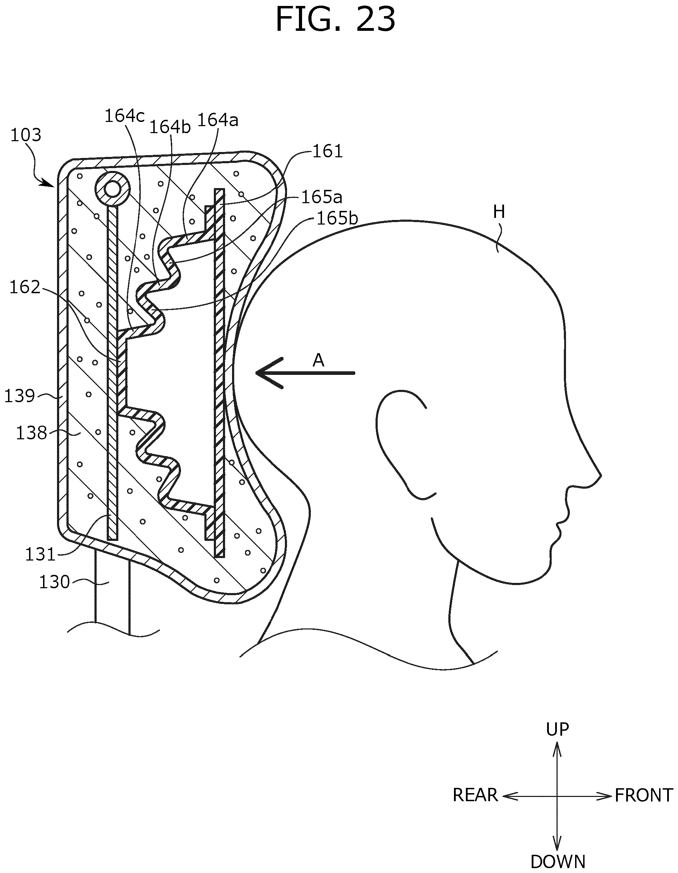

The impact absorber 151 that is a first example of the impact-reducing portion 150 will be described with reference to FIGS. 21 to 23. FIG. 21 is a perspective view of the impact absorber 151 provided in the headrest 103 of the conveyance seat S101, which is the first example, when viewed obliquely from the rear. FIG. 22 is a cross-sectional view taken along line A1-A1 of FIG. 21, and is a view showing the state of the headrest before receiving an impact, and FIG. 23 is a view showing the impact absorber 151 that is crushed in the seat front to rear direction upon receiving an impact.

As shown in FIG. 21, the impact absorber 151 is attached to the pressure-receiving plate 131 of the headrest pillar 130, and can be crushed in the seat front to rear direction upon receiving an impact in a front direction in the event of a collision to reduce the impact.

The impact absorber 151 includes a front surface portion 161 disposed on an occupant side; a rear surface portion 162 disposed behind the front surface portion 161; and a side portion 163 that connects the front surface portion 161 and the rear surface portion 162. Furthermore, as shown in FIGS. 21 and 22, the side portion 163 of the impact absorber 151 is formed such that a cross section of the side portion 163 along the seat front to rear direction has a stepped shape.

The impact absorber 151 is disposed to protrude from the pressure-receiving plate 131 of the headrest 103 toward the front of the seat. In addition, in the description of the side portion 163 of the impact absorber 151 in more detail, the side portion 163 includes a plurality of peripheral wall portions 164 disposed side by side in the seat front to rear direction, and a plurality of connecting portions 165 that connect edge portions of adjacent peripheral wall portions 164 to each other. In addition, the plurality of peripheral wall portions 164 are formed such that the closer the peripheral wall portions 164 are disposed to the front side of the impact absorber, the larger a length W in the seat width direction or a length H in the seat up to down direction of the peripheral wall portions 164 in directions perpendicular to the seat front to rear direction become.

Specifically, the side portion 163 includes a first peripheral wall portion 164a disposed on the most distal end side; a second peripheral wall portion 164b located behind the first peripheral wall portion 164a; and a third peripheral wall portion 164c located on the rearmost side. In addition, the side portion 163 includes a first connecting portion 165a that connects the first peripheral wall portion 164a and the second peripheral wall portion 164b, and a second connecting portion 165b that connects the second peripheral wall portion 164b and the third peripheral wall portion 164c.

A length H1 and a width W2 of the first peripheral wall portion 164a are larger than a length H2 and a width W2 of the second peripheral wall portion 164b. In addition, the length H2 and the width W2 of the second peripheral wall portion 164b are larger than a length H3 and a width W3 of the third peripheral wall portion 164c. In other words, each of the first peripheral wall portion 164a to the third peripheral wall portion 164c has a rectangular lateral cross section, and is formed such that the area increases as each of the first peripheral wall portion 164a to the third peripheral wall portion 164c extends toward the distal end side.

In addition, the impact absorber 151 is formed such that a length L1 of the first peripheral wall portion 164a in the seat front to rear direction, a length L2 of the first peripheral wall portion 164a in the seat front to rear direction, and a length L3 of the first peripheral wall portion 164a in the seat front to rear direction are equal to each other. The impact absorber 151 can be made to crush in a well-balanced manner by setting the lengths of the first peripheral wall portion 164a to the third peripheral wall portion 164c in a protruding direction of the impact absorber 151 (the seat front to rear direction and the direction of an axis X1 of the impact absorber 151) to be equal.

The first connecting portion 165a and the second connecting portion 165b are formed in a plate shape of which the surface is perpendicular to the axis X1.

The rear surface portion 162 of the impact absorber 151 and the pressure-receiving plate 131 may be joined by, for example, adhesion using an adhesive or double-faced tape, fastening using screws, locking using a locking pawl, or the like.

In addition, as shown in FIG. 22, the inside of the impact absorber 151 is hollow, and therefore, when the impact absorber 151 receives an impact from the front, the impact absorber 151 can be easily crushed and easily absorbs the impact.

In addition, since the area of the front surface portion 161 is formed to be large, the front surface portion 161 can more reliably receive a load from the head of the occupant H, the load can be reliably transmitted to the impact absorber 151, and the impact absorber 151 can efficiently absorb the load.

The impact absorber 151 according to the first example can be made of various materials such as a resin material or a metal material. The resin material may be, for example, polypropylene, polyethylene, or a fiber-reinforced resin containing fibers such as carbon, glass, or nanocellulose. When a fiber-reinforced resin is used, the elastic modulus and tensile strength of the material are improved, so that the impact absorber 151 can be made thinner or smaller. As a result, a reduction in weight becomes possible. When the material is a resin material, the impact absorber 151 can be formed by a known molding method such as injection molding.

When the material is a fiber-reinforced resin containing nanocellulose, the base material may be polyethylene, polypropylene, or the like. In addition, it is preferable that the base material forms lamellar layers and the lamellar layers are stacked in a direction different from a fiber length direction of the nanocellulose.

When the head of the occupant H moves due to a rear-end collision of the vehicle, and the impact absorber 151 is compressed in the direction of the axis X1 between the headrest and the occupant, as shown in FIG. 23, the impact absorber 151 is deformed. The side portion 163 of the impact absorber 151, the side portion 163 being formed in a stepped shape, is compressed and deformed, so that a load can be absorbed.

In the first example, the outer diameter of the lateral cross section of each of the peripheral wall portions 164 is formed in a square shape, but is not limited thereto, and can have various shapes such as a rectangular shape, a polygonal shape, a circular shape, an elliptical shape, and a star shape. In addition, the thickness of each vertical wall portion and each horizontal wall portion can be set as desired. The thicknesses of the vertical wall portions and the horizontal wall portions may be set to be equal to each other, or may be set to different values.

The degree of crushing can be easily adjusted by adjusting the rigidity of the peripheral wall portions 164 and the connecting portions 165 through molding the impact absorber from resin. For example, the order in which the peripheral wall portions 164 or the connecting portions 165 are deformed upon receiving an impact can also be adjusted by changing the thickness of the peripheral wall portions 164 or the connecting portions 165.

In addition, when the impact absorber 151 is provided in the headrest 103, the impact absorber 151 may be formed by being foamed integrally with the headrest pad 108. The headrest 103B may be manufactured by covering the impact absorber 151 attached to the headrest pillar 130 with the headrest pad 108, and attaching the headrest pad 108 thereto.

### <Second example>

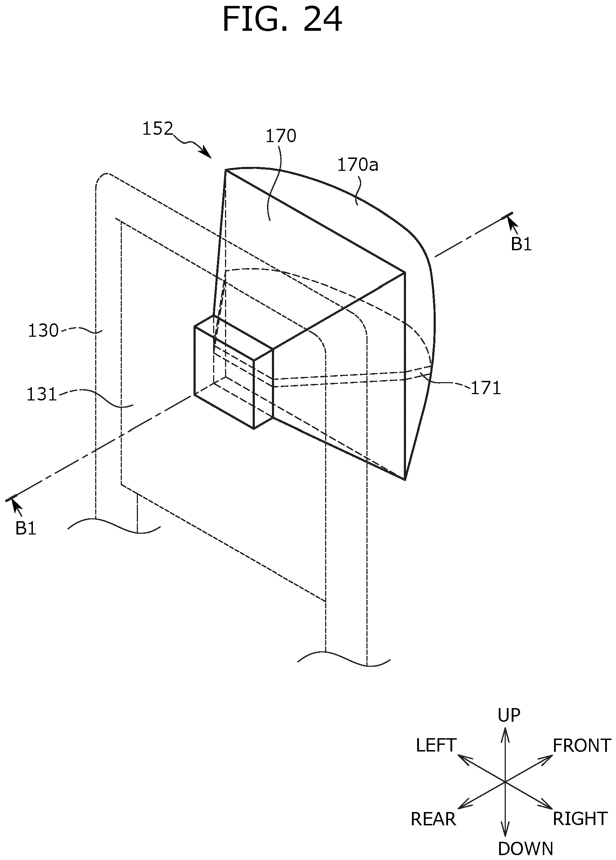

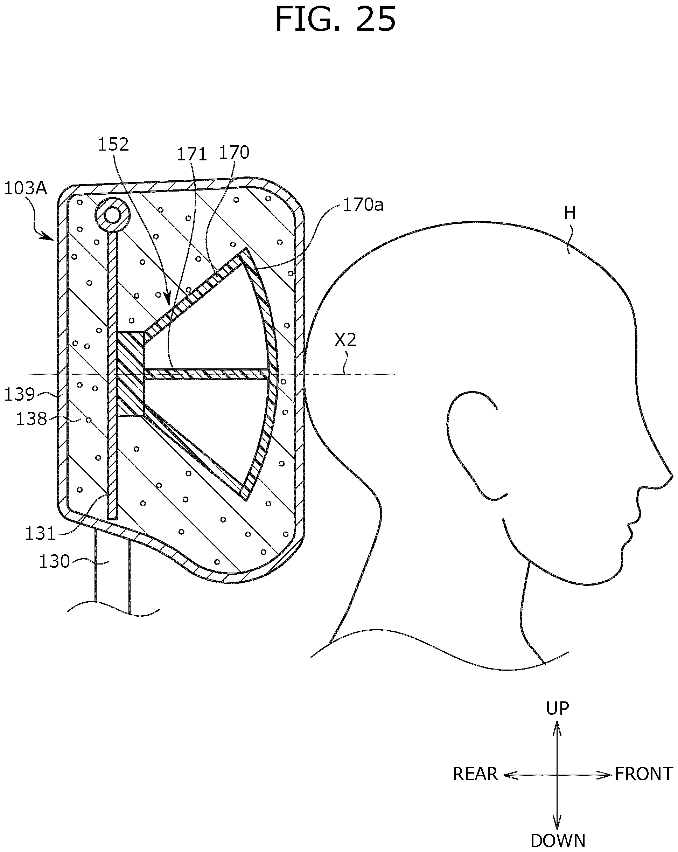

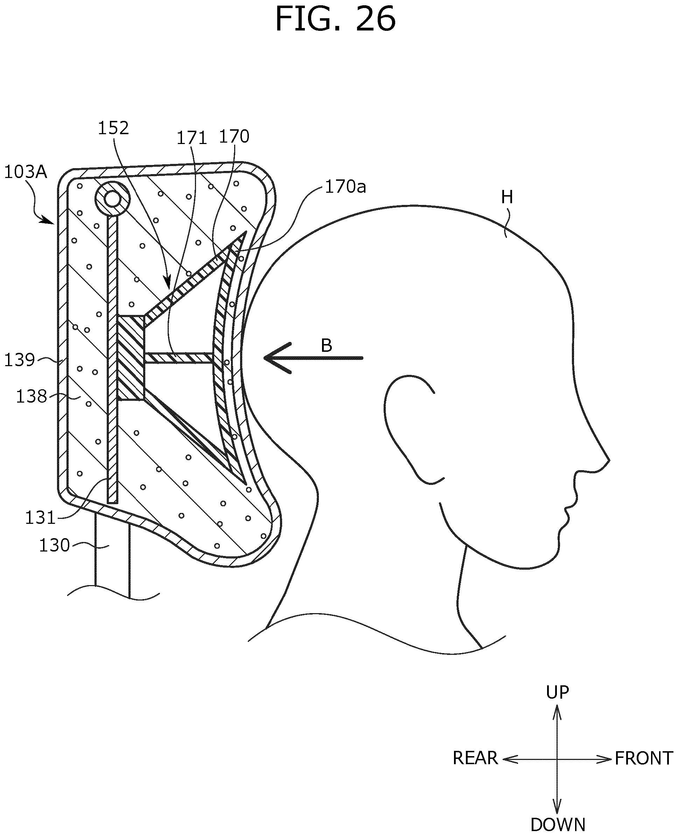

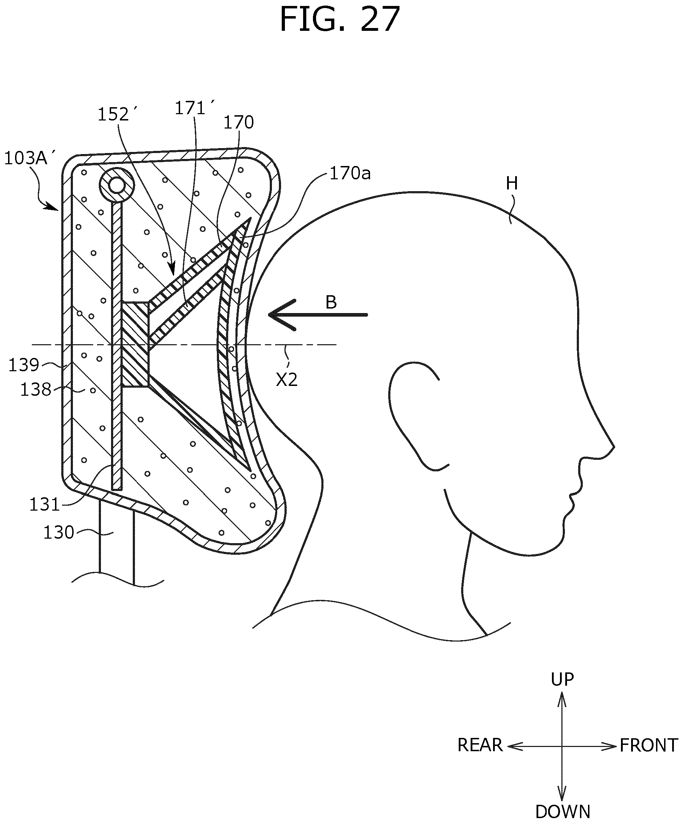

An impact absorber 152 that is a second example of the impact-reducing portion 150 will be described with reference to FIGS. 24 to 27. FIG. 24 is a perspective view of the impact absorber 152 of the second example when viewed obliquely from the rear. FIG. 25 is a cross-sectional view taken along line B1-B1 of FIG. 24, and is a view showing the state of a headrest 103A before receiving an impact, and FIG. 26 is a view showing the impact absorber 152 that is crushed in the seat front to rear direction upon receiving an impact. FIG. 27 is a view showing another example of the impact absorber 152 that is crushed in the seat front to rear direction upon receiving an impact.

The impact absorber 152 is provided in the headrest 103A of a conveyance seat S102. Since the configurations of the conveyance seat S102 and the headrest 103A are the same as those of the conveyance seat S101 and the headrest 103 of the first example except for the impact absorber 152, the same reference signs are assigned, and detailed descriptions thereof will be omitted.

Similarly to the first example, as shown in FIG. 24, the impact absorber 152 is attached to the headrest 103A of the conveyance seat S102 as the impact-reducing portion 150, and can be crushed in the seat front to rear direction upon receiving an impact in a seat front direction in the event of a collision to reduce the impact.

As shown in FIG. 25, the impact absorber 152 includes an outer shell portion 170 of which the cross section along the seat front to rear direction (the direction of an axis X2 of the impact absorber 152) is formed in an annular shape. In addition, a columnar portion 171 that extends in the seat front to rear direction (the direction of the axis X2) and that supports the outer shell portion 170 is provided inside the outer shell portion 170. A front end portion of the columnar portion 171 abuts on a front portion of the outer shell portion 170, and a rear end portion of the columnar portion 171 abuts on a rear portion of the outer shell portion 170.

The columnar portion 171 is configured to be compressed in the front to rear direction as shown in FIG. 26 when the outer shell portion 170 is crushed. The outer shell portion 170 is configured to crush upon receiving an impact to reduce the impact, and the degree of crushing of the outer shell portion 170 can be adjusted by changing the rigidity of the columnar portion 171.

Incidentally, as in a headrest 103A' shown in FIG. 27, the outer shell portion 170 may be configured to crush by shifting a columnar portion 171' from the axis X2 when an impact absorber 152' receives an impact.

In addition, as shown in FIGS. 24 and 25, a front portion 170a of the outer shell portion 170 is formed in a spherical shape protruding toward the front of the seat. In other words, the impact absorber 152 is formed such that a surface on the seated occupant (occupant H) side of the impact absorber 152 has a spherical shape. In addition, upon receiving an impact, the front portion 170a of the impact absorber 152 (outer shell portion 170) is configured to deform and crush into a spherical shape, which protrudes toward the rear of the seat, to fit the shape of the head of the occupant H as shown in FIG. 26. The front portion 170a can hold the head of the occupant H by deforming to fit the shape of the head of the occupant H upon receiving an impact.

Similarly to the impact absorber 151 of the first example, the impact absorber 152 according to the second example can be made of various materials such as a resin material or a metal material. The resin material may be, for example, polypropylene, polyethylene, or a fiber-reinforced resin containing fibers such as carbon, glass, or nanocellulose.

The shape of the impact absorber 152 upon receiving an impact can also be adjusted by changing the thickness of the outer shell portion 170 or the columnar portion 171 constituting the impact absorber 152.

In addition, when the impact absorber 152 is provided in the headrest 103, the impact absorber 152 and the headrest pad 108 may be formed by integral foaming. In addition, the headrest 103 may be manufactured by fixing the impact absorber 152 to the headrest pillar 130, and then covering the impact absorber 152 and the headrest pillar 130 with the headrest pad 108.

### <Third example>

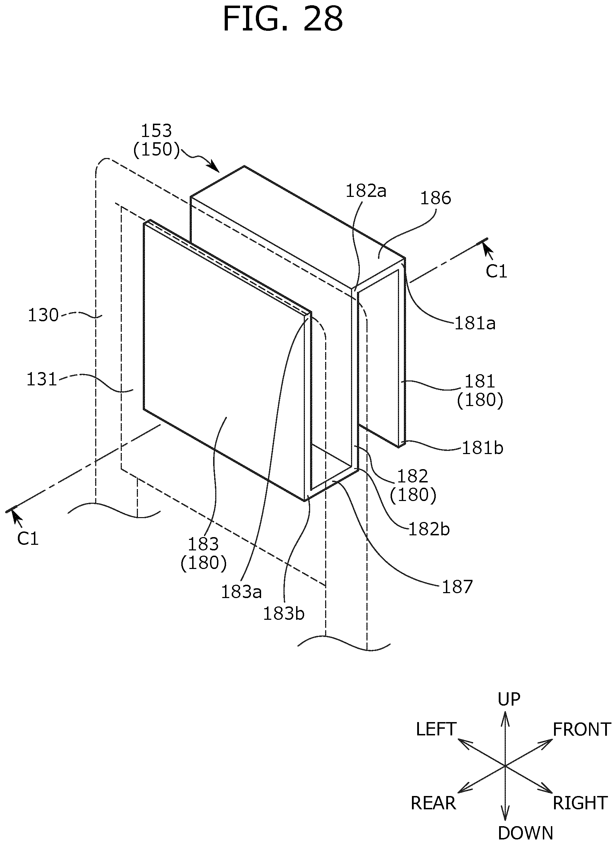

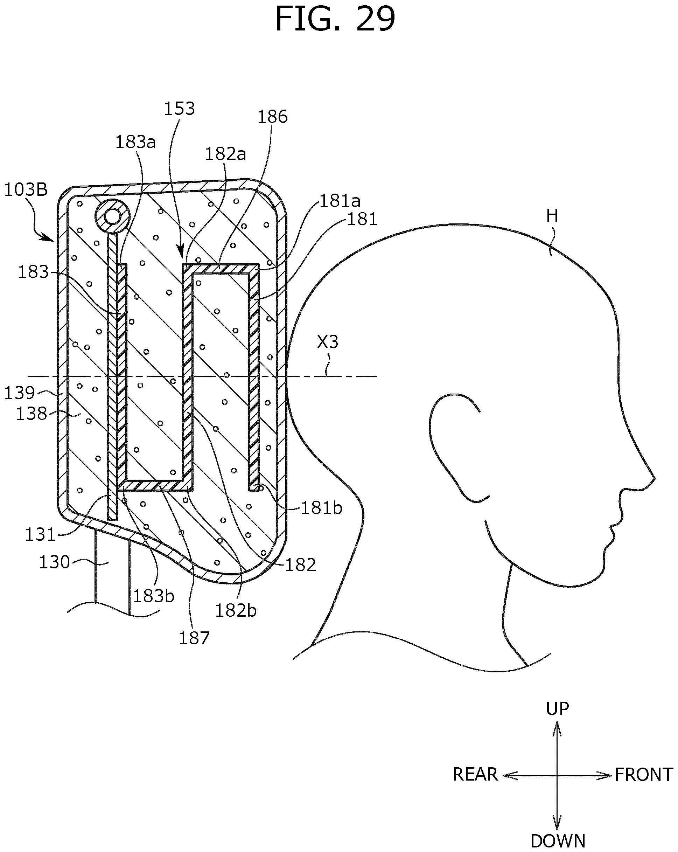

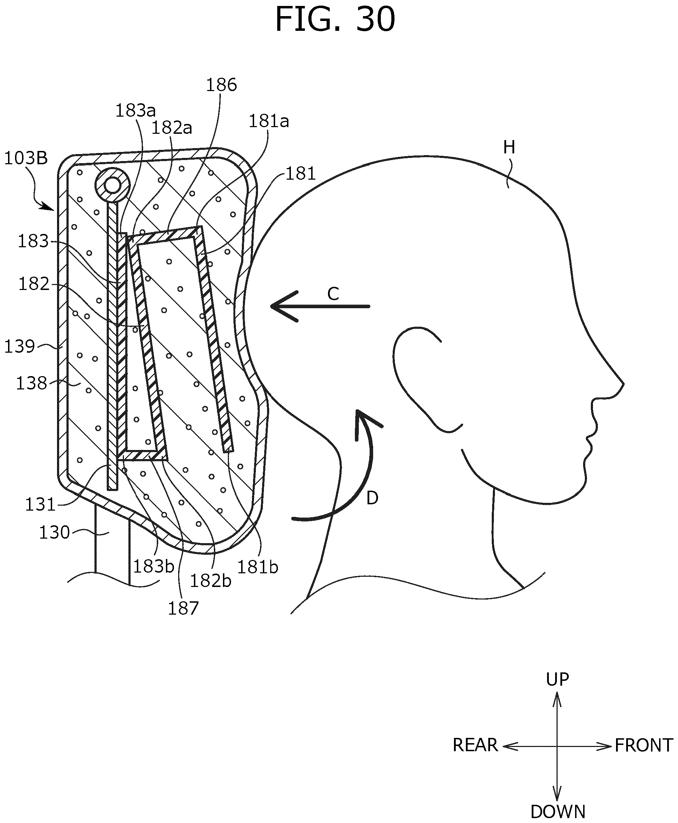

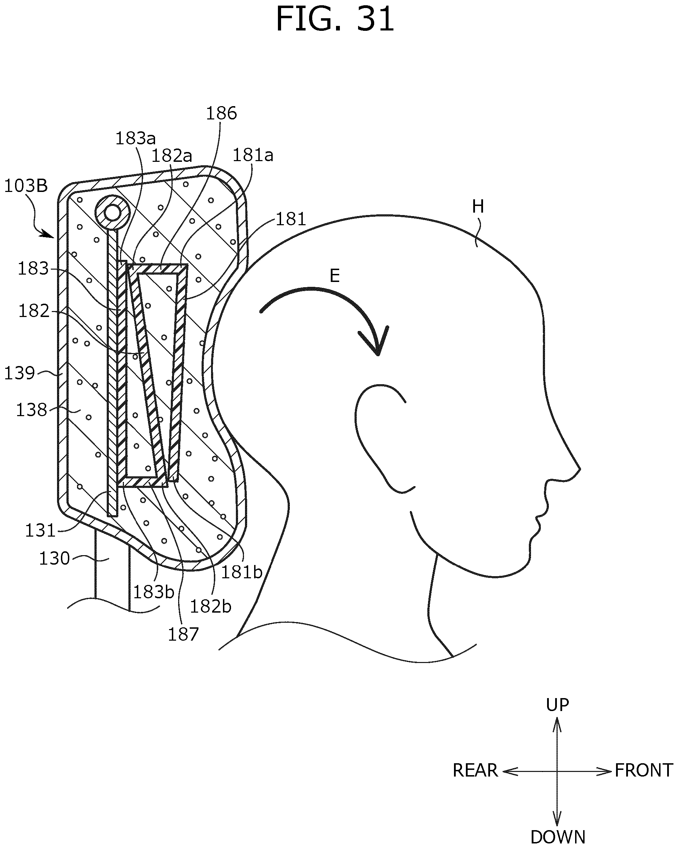

An impact absorber 153 that is a third example of the impact-reducing portion 150 will be described with reference to FIGS. 28 to 31. FIG. 28 is a perspective view of the impact absorber 153 of the third example when viewed obliquely from the rear. FIG. 29 is a cross-sectional view taken along line C1-C1 of FIG. 28, and is a view showing the state of a headrest 103B before receiving an impact, FIG. 30 is a view showing the state of a first stage where the impact absorber 153 is crushed upon receiving an impact, and FIG. 31 is a view showing the state of a second stage where the impact absorber 153 is crushed upon receiving the impact.

Similarly to the impact absorber 151 of the first example and the impact absorber 152 of the second example, as shown in FIG. 28, the impact absorber 153 is attached to the headrest 103B of a conveyance seat S103 as the impact-reducing portion 150, and can be crushed in the seat front to rear direction upon receiving an impact from the front (the direction of arrow C in FIG. 30) in the event of a collision (particularly, in the event of a rear-end collision) to reduce the impact.

As shown in FIG. 28, the impact-reducing portion 150 of the third example includes the impact absorber 153 of which the cross section perpendicular to the seat width direction is formed in an uneven shape. Even with a simple structure, an impact received in the front to rear direction can be effectively absorbed.

The impact absorber 153 includes a plurality of wall portions 180 formed in a plate shape and disposed perpendicularly to the seat front to rear direction (the direction of an axis X3), and a plurality of connection portions 185 that connect edge portions of adjacent wall portions 180 to each other. More specifically, the plurality of wall portions 180 include a first wall portion 181, a second wall portion 182, and a third wall portion 183 in order from a seat front side. In addition, the plurality of connection portions 185 include a first connection portion 186 that connects the first wall portion 181 and the second wall portion 182, and a second connection portion 187 that connects the second wall portion 182 and the third wall portion 183.

The impact absorber 153 is easily crushed in the seat front to rear direction upon receiving an impact due to including the plurality of wall portions 180 formed in a plate shape, and the plurality of connection portions 185 that connect the edge portions of adjacent wall portions 180 to each other. In other words, the impact absorber 153 is easily crushed along the axis X3 along which the wall portions 180 are aligned. For that reason, even with a simple structure, an impact received from the front in the event of a collision can be effectively absorbed.

The first wall portion 181 includes a first edge portion 181a located on the upper side, and a second edge portion 181b located at a position on the side opposite to the first edge portion 181a (the lower side of the first wall portion 181).

The second wall portion 182 includes a first edge portion 182a located on the upper side, and a second edge portion 182b located at a position on the side opposite to the first edge portion 181a (the lower side of the second wall portion 182).

The first edge portion 182a of the second wall portion 182 corresponds to "one edge portion" of the present invention, and the second edge portion 182b corresponds to "the other edge portion".

The third wall portion 183 includes a first edge portion 183a located on the upper side, and a second edge portion 183b located at a position on the side opposite to the first edge portion 181a (the lower side of the third wall portion 183).

As shown in FIG. 28, the first connection portion 186 of the impact absorber 153 connects the first edge portion 181a of the first wall portion 181 and a first edge portion 182a (one edge portion) of the second wall portion 182. In addition, the second connection portion 187 connects the second edge portion 182b (the other edge portion) located on the lower side of the second wall portion 182 and the second edge portion 183b of the third wall portion 183.

With such configurations, the crushing of the impact absorber 153 can be adjusted in two stages to suppress the head of the occupant. Since the rotation of the head is suppressed, a burden on the neck of the occupant can be suppressed.

More specifically, upon receiving an impact from the front in the event of a rear-end collision, as shown in FIG. 30, in the first stage, the second connection portion 187 bends, and the first edge portion 182a of the second wall portion 182 and the first edge portion 183a of the third wall portion 183 come into contact with each other. Such crushing can cause the head of the occupant H to create an upward (the direction of arrow D in FIG. 30) rotation behavior.

Subsequently, in the second stage, as shown in FIG. 31, the first connection portion 186 bends, and the second edge portion 181b of the first wall portion 181 and the second edge portion 182b of the second wall portion 182 come into contact with each other. Such crushing can cause the head of the occupant H to create a downward (the direction of arrow E in FIG. 31) rotation behavior. By adopting the configuration in which crushing is performed in two stages, the rotation of the head of the occupant H can be suppressed, and an impact can be effectively absorbed.

Similarly to the impact absorber 151 of the first example and the impact absorber 152 of the second example, the impact absorber 153 according to the third example can be made of various materials such as a resin material or a metal material. The resin material may be, for example, polypropylene, polyethylene, or a fiber-reinforced resin containing fibers such as carbon, glass, or nanocellulose.

The order in which the impact absorber 153 deforms upon receiving an impact can be adjusted by changing the thickness of the wall portions 180 or the connection portions 185 constituting the impact absorber 153.

When the impact absorber 153 is molded from resin, the rigidity or deformation order of the impact absorber 153 is easily adjusted.

In addition, when the impact absorber 153 is provided in the headrest 103B, the impact absorber 153 may be formed by being foamed integrally with the headrest pad 108. In addition, the headrest 103B may be manufactured by attaching the impact absorber 153 to the headrest pillar 130, and then covering the impact absorber 153 and the headrest pillar 130 with the headrest pad 108.

The conveyance seat according to the present embodiment has been described above with reference to the drawings. In the second example and the third example, the impact absorber 152 and the impact absorber 153 provided in the headrests 103A and 103B have been described as examples; however, such a configuration is one example, and the impact absorber 152 and the impact absorber 153 may be provided inside the seat back 101. With a simple configuration, when an impact occurs, a load from the back of the occupant can be received, and the impact can be reduced.

The following supplementary notes regarding the embodiment described with reference to FIGS. 19 to 31 will be further disclosed.

### (Supplementary Note 1)

A conveyance seat, including:
a seat back;
a headrest connected to an upper portion of the seat back; and
an impact-reducing portion that is provided inside the seat back or inside the headrest, and that is crushed in a seat front to rear direction upon receiving an impact in a seat front direction to reduce the impact.

### (Supplementary Note 2)

The conveyance seat according to Supplementary Note 1,
wherein the impact-reducing portion includes an impact absorber including a front surface portion, a rear surface portion disposed behind the front surface portion, and a side portion that connects the front surface portion and the rear surface portion, and
the side portion of the impact absorber is formed such that a cross section of the side portion along the seat front to rear direction has a stepped shape.

### (Supplementary Note 3)

The conveyance seat according to Supplementary Note 2,
wherein the impact absorber protrudes toward a front of the seat,
the side portion of the impact absorber includes a plurality of peripheral wall portions disposed side by side in the seat front to rear direction, and a plurality of connecting portions that connect edge portions of adjacent peripheral wall portions to each other, and
the plurality of peripheral wall portions are formed such that the closer the peripheral wall portions are disposed to a distal end side of the impact absorber, the larger a length in a seat width direction or a length in a seat up to down direction of the peripheral wall portions in directions perpendicular to the seat front to rear direction become.

### (Supplementary Note 4)

The conveyance seat according to Supplementary Note 3,
wherein the plurality of peripheral wall portions of the impact absorber are formed with an equal length in the seat front to rear direction.

### (Supplementary Note 5)

The conveyance seat according to Supplementary Note 1,
wherein the impact-reducing portion includes an impact absorber including an outer shell portion of which a cross section along the seat front to rear direction is formed in an annular shape.

### (Supplementary Note 6)

The conveyance seat according to Supplementary Note 5,
wherein the impact absorber includes a columnar portion inside the outer shell portion, the columnar portion extending in the seat front to rear direction and supporting the outer shell portion, and
one end portion of the columnar portion abuts on a front side of the outer shell portion, and the other end portion of the columnar portion abuts on a rear side of the outer shell portion.

### (Supplementary Note 7)

The conveyance seat according to Supplementary Note 5,
wherein a front portion of the outer shell portion is formed in a spherical shape protruding toward a front of the seat.

### (Supplementary Note 8)

The conveyance seat according to Supplementary Note 1,
wherein the impact-reducing portion includes an impact absorber of which a cross section perpendicular to a seat width direction is formed in an uneven shape.

### (Supplementary Note 9)

The conveyance seat according to Supplementary Note 8,
wherein the impact absorber protrudes toward a front of the seat,
the impact absorber includes a plurality of wall portions formed in a plate shape and disposed perpendicularly to the seat front to rear direction, and a plurality of connection portions that connect edge portions of adjacent wall portions to each other,
the plurality of wall portions include a first wall portion, a second wall portion, and a third wall portion in order from a front side, and
the plurality of connection portions include a first connection portion that connects the first wall portion and the second wall portion, and a second connection portion that connects the second wall portion and the third wall portion.

### (Supplementary Note 10)

The conveyance seat according to Supplementary Note 9,
wherein the first connection portion of the impact absorber is connected to one edge portion of the second wall portion, and the second connection portion is connected to the other edge portion of the second wall portion located on a side opposite the one edge portion.

According to the conveyance seat of the present invention, it is possible to provide the conveyance seat including the headrest or the seat back that reduces an impact in the event of a collision with a simple structure to suppress a load on the neck of an occupant.

In addition, since the cross section of the side portion of the impact absorber provided as the impact-reducing portion is formed in a stepped shape, even with a simple structure, an impact received in the front to rear direction can be effectively absorbed.

In addition, since the side portion is formed in a stepped shape, a clearance that the peripheral wall portions of the side portion enter when the peripheral wall portions are crushed is created, and crushing can be easily performed. The peripheral wall portions are formed such that the closer the peripheral wall portions are disposed to the distal end side of the impact absorber, the larger the length in the seat width direction or the length in the seat up to down direction of the peripheral wall portions become, and therefore, for example, an impact from the front of the seat can be received over a wider range, and the impact can be more effectively absorbed.

In addition, by forming of the plurality of peripheral wall portions of the impact absorber to have an equal length in the seat front to rear direction, the impact absorber can receive an impact in a well-balanced manner, and can more effectively absorb the impact.

In addition, since the impact-reducing portion includes the impact absorber including the outer shell portion of which the cross section is formed in an annular shape, even with a simple structure, an impact received in the front to rear direction can be effectively absorbed.

In addition, since the columnar portion that supports the outer shell portion is provided inside the outer shell portion, the degree of crushing of the impact absorber can be adjusted, and the impact absorber can more effectively absorb an impact.

In addition, since the front portion of the outer shell portion is formed in a spherical shape protruding toward the front of the seat, even when an impact is received, damage to the inside of the seat back or the headrest can be suppressed.

In addition, since the impact-reducing portion includes the impact absorber formed in an uneven shape, even with a simple structure, an impact received in the front to rear direction can be effectively absorbed.

In addition, since the impact absorber includes the plurality of wall portions formed in a plate shape, and the plurality of connection portions that connect the edge portions of adjacent wall portions to each other, the impact absorber is easily crushed in the seat front to rear direction upon receiving an impact. For that reason, even with a simple structure, an impact received in the front to rear direction can be effectively absorbed.

In addition, since the first connection portion is connected to the one edge portion of the second wall portion, and the second connection portion is connected to the other edge portion of the second wall portion, the impact absorber can be crushed in two stages, and the rotation of the neck of the occupant can be suppressed, and a load on the neck can be suppressed.

### REFERENCE SIGNS LIST

S1, S2: vehicle seat
S101, S102, S103: conveyance seat
F1, F2, F100: seat frame
1, 1B: seat cushion
1a: pad material
1b: skin material
2, 2B: seat back
2a: pad material
2b: skin material
3, 3B: headrest
3a: pad material
3b: skin material
3c: headrest pillar
3d: headrest guide
4: sub-headrest
4c: sub-headrest pillar
4d: sub-headrest guide
5, 5B: armrest (support member)
5a: skin material
5b: support surface
6: electrical component
7: ottoman
7a: skin material
7b: support surface
8: angle adjustment mechanism
9: slide mechanism
10, 10B: cushion frame
11, 11B: side frame
12, 12B: front frame
13, 13B: rear frame
14: pan frame
15, 15B: pressure-receiving member (elastic spring)
16: cushion rotating device
17: support leg
20, 20B: back frame
21: main frame
21a, 21b: side frame
21c: upper frame
21d: lower frame
22: sub-frame
22a: horizontal sub-frame
22b: vertical sub-frame
23: panel frame
23a, 23b: reinforcing protrusion
23c: reinforcing bead
24: connecting frame
25A, 25B: reinforcing bracket
26: damper member
27: arm connecting bracket
28: cushion connecting bracket
29: base connecting bracket
30, 30A: armrest frame (frame)
31: side frame (parallel frame)
32: distal end frame (connecting frame)
33: intermediate frame
34: proximal end frame
35, 35A: support plate
36: support plate connecting piece
40, 40A: armrest pad
41, 41A: first armrest pad (pad material)
42, 42A: body portion (pad body)
42a: front surface
42b: rear surface
42c: outer peripheral surface
42d: accommodation recess
43, 43A: attachment portion
43a: supported surface
43b: side surface
43b1: outer surface
43b2: inner surface
44, 44A: engagement portion
44a: recess
44b: bulging portion
45: second armrest pad (outer pad member)
50: switching device
51: lock member
52: back operating lever
53: connecting cable
54: striker
70: ottoman frame (frame)
71: ottoman side frame
72: ottoman base frame
73: ottoman front frame
74: ottoman pillar
75: ottoman pillar support portion
76: support plate
77: support plate connecting piece
80: ottoman pad
81: first ottoman pad (pad material)
82: body portion
83: attachment portion
84: engagement portion
84a: recess
84b: bulging portion
85: second ottoman pad
101: seat back
102: seat cushion
103, 103A, 103B: headrest
104: slide device
105: reclining device
110: back frame
111: back side frame
112: upper frame
113: lower frame
114: wire
115: pressure-receiving member
116: connecting frame
118: back pad
119: skin member
120: cushion frame
121: cushion side frame
122: pan frame
123: front pipe
124: rear pipe
128: cushion pad
129: skin member
130: headrest pillar
131: pressure-receiving plate
138: headrest pad
139: skin member
150: impact-reducing portion
151, 151A, 152, 153: impact absorber
161: front surface portion
162: rear surface portion
163: side portion
164: peripheral wall portion
164a: first peripheral wall portion
164b: second peripheral wall portion
164c: third peripheral wall portion
165: connecting portion
165a: first connecting portion
165b: second connecting portion
170: outer shell portion
170a: front portion
171: columnar portion
180: wall portion
181: first wall portion
181a: first edge portion
181b: second edge portion
182: second wall portion
182a: first edge portion (one edge portion)
182b: second edge portion (the other edge portion)
183: third wall portion
183a: first edge portion
183b: second edge portion
185: connection portion
186: first connection portion
187: second connection portion
G: gap
H: occupant

## Claims

1. A conveyance seat, comprising:
a support member that supports a seated occupant,
wherein the support member includes a frame forming a skeleton of the support member, and a pad material that covers the frame, and
the pad material includes a pad body that is located between the frame and a support surface that supports the seated occupant, and that receives a load of the seated occupant, and an attachment portion which protrudes from the pad body in a direction separating from the support surface, and in which an engagement portion that engages with the frame is formed.

2. The conveyance seat according to claim 1,
wherein the engagement portion is formed inside an outer peripheral surface of the pad body, the outer peripheral surface being formed in a direction perpendicular to the direction separating from the support surface.

3. The conveyance seat according to claim 1,
wherein the engagement portion is formed at a position overlapping the frame in a direction perpendicular to the support surface.

4. The conveyance seat according to claim 3,
wherein the frame includes a pair of parallel frames located at both end portions in a right to left direction or both end portions in an up to down direction, and extending parallel to each other, and a connecting frame that connects the pair of parallel frames at end portions of the pair of parallel frames in a longitudinal direction, and
the engagement portion is formed at a position overlapping the connecting frame in the direction perpendicular to the support surface.

5. The conveyance seat according to claim 4,
wherein the engagement portion is formed at a position overlapping the pair of parallel frames in the direction perpendicular to the support surface.

6. The conveyance seat according to claim 5,
wherein the engagement portion is continuously formed along the connecting frame and the pair of parallel frames.

7. The conveyance seat according to claim 4,
wherein the frame includes a support plate that is interposed between the pair of parallel frames and that supports the pad material.

8. The conveyance seat according to claim 7,
wherein the support plate is attached to the frame at a position separated from the frame by a connecting member that connects the support plate and the frame.

9. The conveyance seat according to claim 8,
wherein the support plate is attached to the frame at a position separated from the frame in a direction further away from the support surface than the frame.

10. The conveyance seat according to claim **1,**
wherein the pad material is a molded body made of a first resin material, and
the support member includes an outer pad material that covers the frame and the pad material and that is a molded body made of a second resin material different from the first resin material.
